(19) Europäisches Patentamt European Patent Office Office européen des brevets

(11) **EP 4 585 456 A1**

(12) **EUROPEAN PATENT APPLICATION**

(43) Date of publication:
**16.07.2025 Bulletin 2025/29**

(21) Application number: **24202200.2**

(22) Date of filing: **24.09.2024**

(51) International Patent Classification (IPC):
**B60L 58/12** $^{(2019.01)}$ **B60W 50/00** $^{(2006.01)}$
**B60L 58/24** $^{(2019.01)}$ **B60L 7/10** $^{(2006.01)}$

(52) Cooperative Patent Classification (CPC):
**B60L 58/12; B60L 7/10; B60L 58/24;**
**B60W 50/0097;** B60L 2240/545; B60L 2240/62;
B60L 2240/662; B60L 2240/68; B60L 2260/50;
B60L 2260/52; B60L 2260/54

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.01.2024 KR 20240004340**

(71) Applicants:
• **Hyundai Motor Company**
**Seoul 06797 (KR)**
• **Kia Corporation**
**Seocho-gu**
**Seoul 06797 (KR)**

(72) Inventors:
• **KANG, Tae Woo**
**18280 Hwaseong-si, Gyeonggi-do, (KR)**
• **JANG, Hyun Jun**
**18280 Hwaseong-si, Gyeonggi-do, (KR)**
• **PARK, Byung Soo**
**18280 Hwaseong-si, Gyeonggi-do, (KR)**

(74) Representative: **Viering, Jentschura & Partner**
**mbB**
**Patent- und Rechtsanwälte**
**Am Brauhaus 8**
**01099 Dresden (DE)**

(54) **VEHICLE CONTROL DEVICE AND METHOD THEREOF**

(57) In a vehicle control device and a method thereof, the vehicle control device includes a processor, a memory, and a battery. The processor is configured to identify a route from a first location of a vehicle to a second location of the vehicle and an estimated time of arrival when the vehicle will arrive at the second location, obtains predicted energy consumption to be consumed while the vehicle is traveling along the route, divides the route into at least one partial route, identifies a predicted load current to be generated from the battery in the at least one divided partial route, and obtains a predicted temperature of the battery, which will be identified if the vehicle arrives at the second location, using at least one of an outside air temperature, the predicted load current, an initial temperature of the battery, or a state of charge (SOC) value of the battery, or any combination thereof.

FIG.1

**EP 4 585 456 A1**

**Description**

**CROSS-REFERENCE TO RELATED APPLICATION**

The present application claims priority to Korean Patent Application No. 10-2024-0004340, filed on January 10, 2024, the entire contents of which is incorporated herein for all purposes by this reference.

**BACKGROUND OF THE PRESENT DISCLOSURE**

**Field of the Present Disclosure**

The present disclosure relates to a vehicle control device and a method thereof, and more particularly, relates to technologies for identifying a battery temperature.

**Description of Related art**

With recent trends in strengthening global environmental regulations and reducing energy costs, demand for environmentally friendly electric vehicles (EVs) has increased. The distribution of electric vehicles becomes mandatory due to the enactment of the Air Conservation Act in the United States and Europe. Interest and research on green cars (eco-friendly cars) are actively underway as part of low-carbon, green growth in Korea as well. Because the battery of the electric vehicle is discharged while driving, there may be a need to charge the electric vehicle to drive the electric vehicle. It is known that the battery charging time takes 4 to 9 hours when using fully charged electricity, or 30 minutes to 1 hour upon fast charging. If an uncertain estimated time of arrival which does not include a charging time is provided to a user of the electric vehicle at a starting time point, there may occur a problem in which it generates anxiety for the user of the electric vehicle, such as disruption of plans after arrival. Thus, to address the problem, there is a need to predict a charging time of a battery and provide a more accurate estimated time of arrival together with the predicted charging time.

The information included in this Background of the present disclosure is only for enhancement of understanding of the general background of the present disclosure and may not be taken as an acknowledgement or any form of suggestion that this information forms the prior art already known to a person skilled in the art.

**BRIEF SUMMARY**

Various aspects of the present disclosure are directed to providing a vehicle control device for identifying a predicted temperature of a battery, which will be identified at a destination to which a vehicle will move, at a current location of the vehicle and a method thereof.

Another aspect of the present disclosure provides a vehicle control device for selecting a charging station for charging a battery, while a vehicle is traveling from a current location of the vehicle to a destination, and a method thereof.

Another aspect of the present disclosure provides a vehicle control device for identifying a charging time for charging a battery based on a predicted temperature of a battery and a remaining SOC value of the battery and a method thereof.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a vehicle control device may include a processor, a memory, and a battery. The processor may be configured to identify a route from a first location of a vehicle to a second location of the vehicle and an estimated time of arrival when the vehicle will arrive at the second location, obtain predicted energy consumption to be consumed while the vehicle is traveling along the route, identify a predicted load current to be generated from the battery based on the predicted energy consumption, and obtain a predicted temperature of the battery, the predicted temperature to be identified if the vehicle arrives at the second location, using at least one of an outside air temperature, the predicted load current, an initial temperature of the battery, the initial temperature being identified at the first location, or a state of charge (SOC) value of the battery, the SOC being identified at the first location, or any combination thereof.

In an exemplary embodiment of the present disclosure, the processor may be configured to divide the route into at least one partial route depending on a change in a speed of the vehicle, and identify the predicted load current, in the at least one divided partial route, using a first parameter associated with electrical energy to be charged based on regenerative braking, a nominal voltage of the battery, the estimated time of arrival, and the predicted energy consumption.

In an exemplary embodiment of the present disclosure, the processor may be configured to identify a first outside air temperature at the first location, obtain a second outside air temperature corresponding to a location of the vehicle which is traveling from an external electronic device, while the vehicle is traveling along the route, obtain the predicted temperature of the battery, using at least one of the second outside air temperature, the predicted load current, the initial temperature of the battery, or the SOC value of the battery, or any combination thereof, if a difference between the first outside air temperature and the second outside air temperature is greater than or equal to a first threshold, and obtain the predicted temperature of the battery, using at least one of the first outside air temperature, the predicted load current, the initial temperature of the battery, or the SOC value of the battery, or any combination thereof, if the difference between the first outside air temperature and the second outside air temperature is less than the first threshold.

In an exemplary embodiment of the present disclosure, the processor may be configured to identify a third outside air temperature at the first location, obtain a fourth outside air temperature indicating a temperature at the second location at the estimated time of arrival, from an external electronic device, obtain the predicted temperature of the battery, using at least one of the fourth outside air temperature, the predicted load current, the initial temperature of the battery, or the SOC value of the battery, or any combination thereof, if a difference between the third outside air temperature and the fourth outside air temperature is greater than or equal to a second threshold, and obtain the predicted temperature of the battery, using at least one of the third outside air temperature, the predicted load current, the initial temperature of the battery, or the SOC value of the battery, or any combination thereof, if the difference between the third outside air temperature and the fourth outside air temperature is less than the second threshold.

In an exemplary embodiment of the present disclosure, the processor may be configured to identify a second parameter and a third parameter, using the predicted load current and the SOC value of the battery, and obtain the predicted temperature of the battery, using at least one of the second parameter, the third parameter, the outside air temperature, or the initial temperature of the battery, or any combination thereof, the second parameter may indicate energy lost by internal resistance of the battery, using the predicted load current and the SOC value of the battery. The third parameter may indicate an amount of change in entropy for the battery, using the predicted load current and the SOC value of the battery.

In an exemplary embodiment of the present disclosure, the second parameter may be obtained based on a relationship between the internal resistance of the battery and a temperature of the battery and a relationship between the internal resistance of the battery and the SOC value of the battery.

In an exemplary embodiment of the present disclosure, the processor may be configured to additionally identify a thermal capacity of the battery and thermal resistance of the battery due to the outside air temperature and obtain the predicted temperature of the battery, using at least one of the second parameter, the third parameter, or the initial temperature of the battery, or any combination thereof, the thermal capacity of the battery, and the thermal resistance of the battery.

In an exemplary embodiment of the present disclosure, the SOC may include a first SOC. The predicted temperature may include a first predicted temperature. The processor may be configured to identify a third location indicating a target charging station between the first location and the second location, obtain a second predicted temperature of the battery, the second predicted temperature to be identified if the vehicle arrives at the third location, based on the predicted load current, the initial temperature of the battery, and the first SOC value of the battery, predict a second SOC value of the battery at the third location, based on the second predicted temperature, and identify a charging time for charging the battery from the second SOC to a predetermined SOC value, using the target charging station.

In an exemplary embodiment of the present disclosure, the processor may be configured to identify a drivable distance of the vehicle, based on the SOC value of the battery, and identify the third location, using information associated with a plurality of charging stations, within a distance shorter than the drivable distance. The information associated with the plurality of charging stations may include at least one of a charging speed, a charging type, a distance from the vehicle for each of the charging stations, or whether the plurality of charging stations are available, or any combination thereof.

In an exemplary embodiment of the present disclosure, the vehicle control device may further include a display. The processor may be configured to display the charging time together with text indicating the third location on the display, based on identifying the route.

According to another aspect of the present disclosure, a vehicle control device may include identifying a route from a first location of a vehicle to a second location of the vehicle and an estimated time of arrival when the vehicle will arrive at the second location, obtaining predicted energy consumption to be consumed while the vehicle is traveling along the route, identifying a predicted load current to be generated from a battery based on the predicted energy consumption, and obtaining a predicted temperature of the battery, the predicted temperature to be identified if the vehicle arrives at the second location, using at least one of an outside air temperature, the predicted load current, an initial temperature of the battery, the initial temperature being identified at the first location, or a state of charge (SOC) value of the battery, the SOC being identified at the first location, or any combination thereof.

In an exemplary embodiment of the present disclosure, the identifying of the predicted load current may include dividing the route into at least one partial route depending on a change in a speed of the vehicle, and identifying the predicted load current, in the at least one divided partial route, using a first parameter associated with electrical energy to be charged based on regenerative braking, a nominal voltage of the battery, the estimated time of arrival, and the predicted energy consumption.

In an exemplary embodiment of the present disclosure, the vehicle control method may further include identifying a first outside air temperature at the first location, obtaining a second outside air temperature corresponding to a location of the vehicle which is traveling from an external electronic device, while the vehicle is traveling along the route, obtaining the predicted temperature of the battery, using at least one of the second outside air temperature, the predicted load current, the initial temperature of the battery, or the SOC value of the battery, or any combination thereof, if a difference between the first outside air temperature and the second outside air temperature is greater than or equal to a first threshold, and obtaining the predicted temperature of the battery, using at least one of the first outside air temperature, the predicted load current, the initial temperature of the battery, or the SOC value of the battery, or any combination thereof, if the difference between the first outside air temperature and the second outside air temperature is less than the first threshold.

In an exemplary embodiment of the present disclosure, the vehicle control method may further include identifying a third outside air temperature at the first location, obtaining a fourth outside air temperature indicating a temperature at the second location at the estimated time of arrival, from an external electronic device, obtaining the predicted temperature of the battery, using at least one of the fourth outside air temperature, the predicted load current, the initial temperature of the battery, or the SOC value of the battery, or any combination thereof, if a difference between the third outside air temperature and the fourth outside air temperature is greater than or equal to a second threshold, and obtaining the predicted temperature of the battery, using at least one of the third outside air temperature, the predicted load current, the initial temperature of the battery, or the SOC value of the battery, or any combination thereof, if the difference between the third outside air temperature and the fourth outside air temperature is less than the second threshold.

In an exemplary embodiment of the present disclosure, the obtaining of the predicted temperature of the battery may include identifying a second parameter and a third parameter, using the predicted load current and the SOC value of the battery, and obtaining the predicted temperature of the battery, using at least one of the second parameter, the third parameter, the outside air temperature, or the initial temperature of the battery, or any combination thereof, the second parameter may indicate energy lost by internal resistance of the battery, using the predicted load current and the SOC value of the battery. The third parameter may indicate an amount of change in entropy for the battery, using the predicted load current and the SOC value of the battery.

In an exemplary embodiment of the present disclosure, the second parameter may be obtained based on a relationship between the internal resistance of the battery and a temperature of the battery and a relationship between the internal resistance of the battery and the SOC value of the battery.

In an exemplary embodiment of the present disclosure, the obtaining of the predicted temperature of the battery may include additionally identifying a thermal capacity of the battery and thermal resistance of the battery due to the outside air temperature and obtaining the predicted temperature of the battery, using at least one of the second parameter, the third parameter, or the initial temperature of the battery, or any combination thereof, the thermal capacity of the battery, and the thermal resistance of the battery.

In an exemplary embodiment of the present disclosure, the SOC may include a first SOC. The predicted temperature may include a first predicted temperature. The vehicle control method may further include identifying a third location indicating a target charging station between the first location and the second location, obtaining a second predicted temperature of the battery, the second predicted temperature to be identified if the vehicle arrives at the third location, based on the predicted load current, the initial temperature of the battery, and the first SOC value of the battery, predicting a second SOC value of the battery at the third location, based on the second predicted temperature, and identifying a charging time for charging the battery from the second SOC to a predetermined SOC value, using the target charging station.

In an exemplary embodiment of the present disclosure, the identifying of the third location may include identifying a drivable distance of the vehicle, based on the SOC value of the battery, and identifying the third location, using information associated with a plurality of charging stations, within a distance shorter than the drivable distance. The information associated with the plurality of charging stations may include at least one of a charging speed, a charging type, a distance from the vehicle for each of the charging stations, or whether the plurality of charging stations are available, or any combination thereof.

In an exemplary embodiment of the present disclosure, the identifying of the charging time may include displaying the charging time together with text indicating the third location, based on identifying the route.

The methods and apparatuses of the present disclosure have other features and advantages which will be apparent from or are set forth in more detail in the accompanying drawings, which are incorporated herein, and the following Detailed Description, which together serve to explain certain principles of the present disclosure.

## BRIEF DESCRIPTION OF THE DRAWINGS

FIG. 1 illustrates an example of a block diagram associated with a vehicle control device according to an exemplary embodiment of the present disclosure;

FIG. 2 illustrates an example of a graph for describing an operation of identifying a charging time in a vehicle control device according to an exemplary embodiment of the present disclosure;

FIG. 3 illustrates an example of a flowchart illustrating an operation of a vehicle control device according to an exemplary embodiment of the present disclosure;

FIG. 4 illustrates an example of a screen displayed on a display by a vehicle control device according to an exemplary embodiment of the present disclosure;

FIG. 5 illustrates an example for describing an operation of identifying a charging station in a vehicle control device according to an exemplary embodiment of the present disclosure;

FIG. 6A and FIG. 6B illustrate an example of a graph for describing a load current identified based on energy consumption by a vehicle control device according to an exemplary embodiment of the present disclosure;

FIG. 7 illustrates an example of a graph for describing a temperature of a battery, which is identified based on current consumption by a vehicle control device, according to an exemplary embodiment of the present disclosure;

FIG. 8A and FIG. 8B illustrate an example of a graph for describing an outside air temperature used to identify a temperature of a battery by a vehicle control device according to an exemplary embodiment of the present disclosure;

FIG. 9 illustrates an example of a battery temperature predictor for identifying a temperature of a battery of a vehicle control device according to an exemplary embodiment of the present disclosure;

FIG. 10 illustrates an example of a load current predictor for identifying a load current of a battery of a vehicle control device according to an exemplary embodiment of the present disclosure;

FIG. 11 illustrates an example of a battery temperature predictor for identifying a temperature of a battery of a vehicle control device according to an exemplary embodiment of the present disclosure;

FIG. 12 illustrates an example of a circuit for identifying irreversible heat for a battery in a vehicle control device according to an exemplary embodiment of the present disclosure;

FIG. 13 illustrates an example of a circuit for identifying reversible heat for a battery in a vehicle control device according to an exemplary embodiment of the present disclosure;

FIG. 14 illustrates an example of a circuit for identifying a predicted temperature of a battery in a vehicle control device according to an exemplary embodiment of the present disclosure; and

FIG. 15 illustrates an example of a flowchart illustrating a vehicle control method according to an exemplary embodiment of the present disclosure.

It may be understood that the appended drawings are not necessarily to scale, presenting a somewhat simplified representation of various features illustrative of the basic principles of the present disclosure. The specific design features of the present disclosure as included herein, including, for example, specific dimensions, orientations, locations, and shapes will be determined in part by the particularly intended application and use environment.

In the figures, reference numbers refer to the same or equivalent parts of the present disclosure throughout the several figures of the drawing.

## DETAILED DESCRIPTION

Reference will now be made in detail to various embodiments of the present disclosure(s), examples of which are illustrated in the accompanying drawings and described below. While the present disclosure(s) will be described in conjunction with exemplary embodiments of the present disclosure, it will be understood that the present description is not intended to limit the present disclosure(s) to those exemplary embodiments of the present disclosure. On the other hand, the present disclosure(s) is/are intended to cover not only the exemplary embodiments of the present disclosure, but also various alternatives, modifications, equivalents and other embodiments, which may be included within the spirit and scope of the present disclosure as defined by the appended claims.

Hereinafter, various exemplary embodiments of the present disclosure will be described in detail with reference to the exemplary drawings. In adding the reference numerals to the components of each drawing, it should be noted that the identical component is designated by the identical numerals even when they are displayed on other drawings. In addition, a detailed description of well-known features or functions will be ruled out in order not to unnecessarily obscure the gist of the present disclosure.

In describing components of exemplary embodiments of the present disclosure, the terms first, second, A, B, (a), (b), and the like may be used herein. These terms are only used to distinguish one component from another component, but do not limit the corresponding components irrespective of the order or priority of the corresponding components. Furthermore, unless otherwise defined, all terms including technical and scientific terms used herein have the same meaning as being generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

The term "module" used In various embodiments of the present disclosure may include a unit implemented with hardware, software, or firmware, and may be interchangeably used with terms, for example, "logic," "logic block," "part," or "circuitry". A module may be an integral part, or a minimum unit or portion thereof, adapted to perform one or more functions. In an exemplary embodiment of the present disclosure, the module may be implemented in a form of an application-specific integrated circuit (ASIC). According to various exemplary embodiments of the present disclosure, operations performed by the module, the program, or another component may be carried out sequentially, in parallel, or repeatedly, or one or more of the operations may be executed in a different order or omitted, or one or more other operations may be added.

Various embodiments of the present disclosure may be implemented as software (e.g., a program) including one or more instructions stored in a storage medium (e.g., an internal memory or an external memory) readable by a machine (e.g., a vehicle control device 100). For example, a processor (e.g., a processor 110) of the device (e.g., the vehicle control device 100) may invoke at least one of the stored one or more instructions from the storage medium and may execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device and

does not include a signal (e.g., an electromagnetic wave), but the present term does not differentiate between where data is semipermanently stored in the storage medium and where data is temporarily stored in the storage medium.

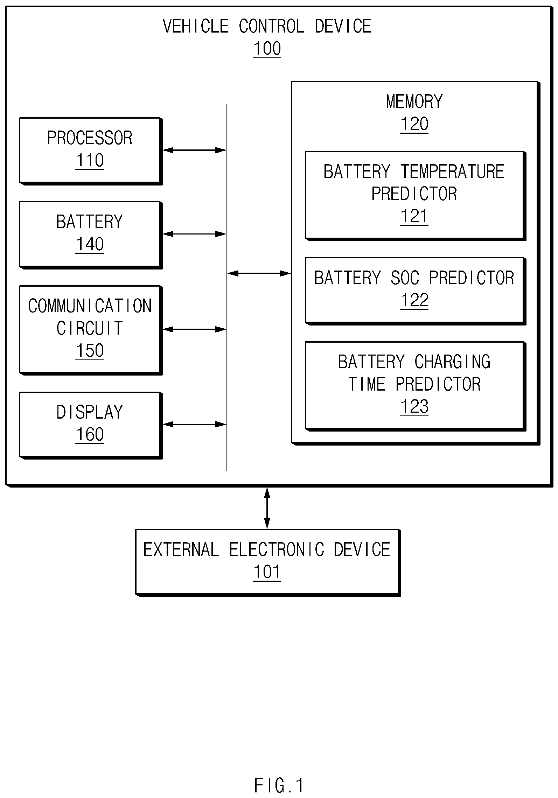

Hereinafter, various exemplary embodiments of the present disclosure will be described in detail with reference to FIGS. 1 to 15.

FIG. 1 illustrates an example of a block diagram associated with a vehicle control device according to an exemplary embodiment of the present disclosure. Referring to FIG. 1, a vehicle control device 100 according to an exemplary embodiment of the present disclosure may establish a connection with an external electronic device 101 based on a wired network and/or a wireless network. For example, the wired network may include a network such as the Internet, a local area network (LAN), a wide area network (WAN), an Ethernet for vehicle, a Controller Area Network (CAN), a Local Interconnect Network (LIN), or FlexRay, or any combination thereof. For example, the wireless network may include a network such as Long Term Evolution (LTE), 5th generation new radio (5GNR), wireless fidelity (Wi-Fi), ZigBee, Near Field Communication (NFC), Bluetooth, or Bluetooth low-energy (BLE), or any combination thereof. Although it is shown that the vehicle control device 100 is directly connected to the external electronic device 101, the vehicle control device 100 and the external electronic device 101 may be indirectly connected to each other through an intermediate node in a network. For example, the external electronic device 101 may be referred to as a server.

Referring to FIG. 1, the vehicle control device 100 according to an exemplary embodiment of the present disclosure may be implemented inside or outside a vehicle, and some of components included in the vehicle control device 100 may be implemented inside or outside the vehicle. In the instant case, the vehicle control device 100 may be integrally configured with control units in the vehicle or may be implemented as a separate device to be connected to the control units of the vehicle by a separate connection means. For example, the vehicle control device 100 may further include components which are not shown in FIG. 1. Hereinafter, at least one of operations performed by the vehicle control device 100 may be performed by a processor 110 or a processor included in the external electronic device 101.

According to an exemplary embodiment of the present disclosure, the vehicle control device 100 may include at least one of the processor 110, a memory 120, a battery 140, a communication circuit 150, or a display 160. The processor 110, the memory 120, the battery 140, the communication circuit 150, and the display 160 may be electronically or operably coupled with each other by an electronical component including a communication bus. Hereinafter, that pieces of hardware are operably coupled with each other may mean that a direct connection or an indirect connection between the pieces of hardware is established in a wired or wireless manner so that second hardware is controlled by first hardware among the pieces of hardware. They are illustrated based on the different blocks, but an exemplary embodiment of the present disclosure is not limited thereto. Some of the pieces of hardware of FIG. 1 (e.g., at least some of the processor 110, the memory 120, and the communication circuit 150) may be included in a single integrated circuit such as a system on a chip (SoC).

The processor 110 of the vehicle control device 100 according to various exemplary embodiments of the present disclosure may include hardware for processing data based on one or more instructions. The hardware for processing the data may include, for example, an arithmetic and logic unit (ALU), a floating point unit (FPU), a field programmable gate array (FPGA), a central processing unit (CPU), a micro controller unit (MCU), and/or an application processor (AP). The number of the processors 110 may be one or more in number. For example, the processor 110 may include a structure of a multi-core processor such as a dual core, a quad core, or a hexa core.

According to an exemplary embodiment of the present disclosure, the memory 120 of the vehicle control device 100 may include a hardware component for storing data and/or an instruction input and/or output from the processor 110. The memory 120 may include, for example, a volatile memory, such as a random-access memory (RAM), and/or a non-volatile memory, such as a read-only memory (ROM). The volatile memory may include at least one of, for example, a dynamic RAM (DRAM), a static RAM (SRAM), a cache RAM, or a pseudo SRAM (PSRAM). The non-volatile memory may include at least one of, for example, a programmable ROM (PROM), an erasable PROM (EPROM), an electrically erasable PROM (EEPROM), a flash memory, a hard disk, a compact disc, a solid state drive (SSD), or an embedded multi-media card (eMMC).

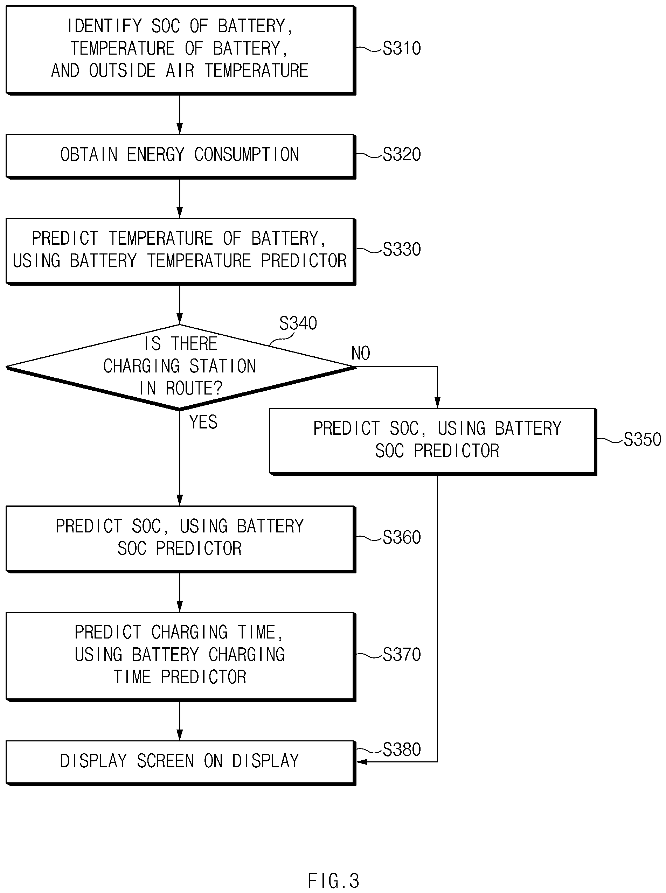

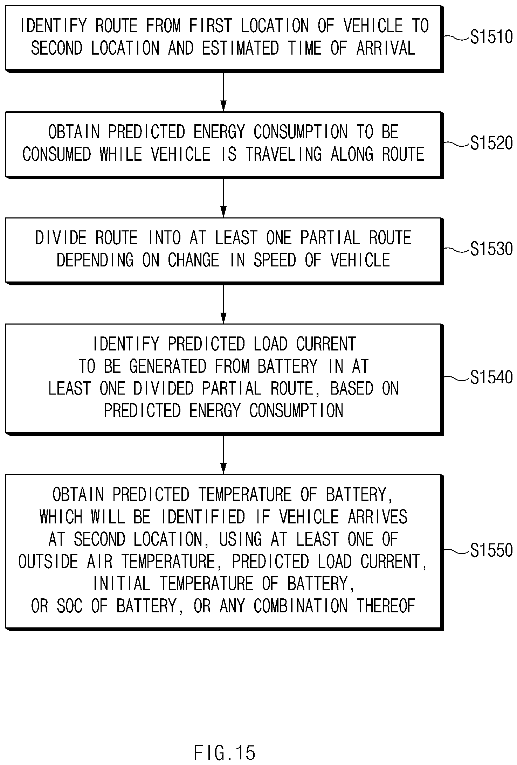

One or more instructions indicating calculation and/or an operation to be performed for data by the processor 110 may be stored in the memory 120 of the vehicle control device 100 according to an exemplary embodiment of the present disclosure. A set of the one or more instructions may be referred to as firmware, an operating system, a process, a routine, a sub-routine, and/or an application. For example, when a set of a plurality of instructions distributed in a form of an operating system, firmware, a driver, and/or an application, the vehicle control device 100 and/or the processor 110 may perform at least one of operations of FIG. 3 or 15. Hereinafter, that software in a form of an operating system, firmware, a driver, and/or an application is provided in the vehicle control device 100 may mean that one or more instructions provided in a form of software are stored in the memory 120 of the vehicle control device 100, which may mean that one or more applications are stored in a format executable by the processor 110 of the vehicle control device 100 (e.g., as a file with an extension specified by an operating system of the vehicle control device 100).

The battery 140 of the vehicle control device 100 according to various exemplary embodiments of the present disclosure may include a battery cell, a battery module, or a battery pack. For example, the battery 140 may be composed of one or more unit cells. The battery 140 may include a capacitor or a secondary battery, which stores power depending on charging. For example, the battery 140 may include any one of a lithium (Li)-ion battery, a Li-ion polymer battery, a lead-acid battery, a nickel-cadmium (NiCd) battery, or a nickel-metal hydride (NiMH) battery. The battery 140 may supply electrical energy to a motor and may be charged using electrical energy collected through the motor based on regenerative braking. The vehicle control device 100 may be configured for controlling the vehicle, based on a state of charge (SOC) value of the battery 140. The vehicle control device 100 may identify a drivable distance for moving the vehicle, depending on the SOC value of the battery 140. The vehicle control device 100 may identify a location (e.g., a charging station) for charging the battery 140, based on identifying the drivable distance. The vehicle control device 100 may receive information related to a charging station corresponding to the location for charging from an external server (e.g., the external electronic device 101). For example, the vehicle control device 100 may identify a time (e.g., a charging time) spent to charge the battery 140 to a specified SOC value, based on information related to the charging station and/or the temperature of the battery 140.

According to an exemplary embodiment of the present disclosure, the communication circuit 150 of the vehicle control device 100 may include hardware for supporting transmission or reception of an electrical signal between the vehicle control device 100 and an external electronic device (e.g., a server and/or an external vehicle control device different from the vehicle control device 100). For example, the communication circuit 150 may include at least one of a modem, an antenna, or an optic/electronic (O/E) converter. The communication circuit 150 may support transmission and/or reception of an electrical signal based on various types of protocols such as an Ethernet for vehicle, a Controller Area Network (CAN), a Local Interconnect Network (LIN), FlexRay, a local area network (LAN), a wide area network (WAN), wireless fidelity (Wi-Fi), Bluetooth, Bluetooth low energy (BLE), ZigBee, Long Term Evolution (LTE), a thread, a matter, and 5th generation new radio (5GNR).

The vehicle control device 100 according to various exemplary embodiments of the present disclosure may receive map information (or navigation information) from the external server through the communication circuit 150. The map information may include information related to a grade degree of a road included in three-dimensional (3D) map data, information related to a speed limit, and/or information related to a traffic speed included in transport protocol expert group (TPEG) data.

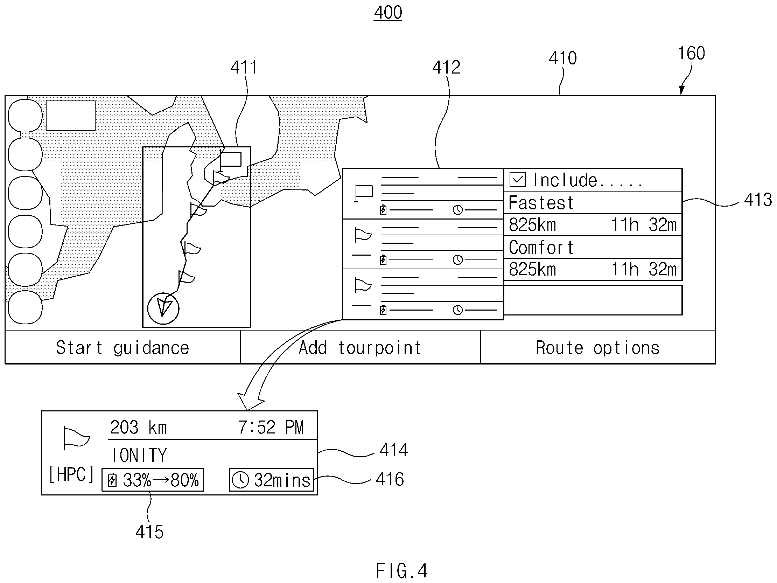

According to an exemplary embodiment of the present disclosure, the display 160 of the vehicle control device 100 may be used to visualized information to a user. For example, the display 160 may be controlled by the processor 110 including a circuit, such as a graphic processing unit (GPU), to output visualized information to the user. The display 160 may include a flat panel display (FPD) and/or an electronic paper. The FPD may include a liquid crystal display (LCD), a plasma display panel (PDP), and/or one or more light emitting diodes (LEDs). The LED may include an organic LED (OLED). The display 160 may have at least partially curved shape and/or a deformable shape. For example, the display 160 may be used to provide a vehicle infotainment system. The display 160 may include audio, video, navigation (AVN). The vehicle control device 100 according to various exemplary embodiments of the present disclosure may display a screen indicating map information obtained through the communication circuit 150 on the display 160. The operation of displaying the screen on the display 160 in the vehicle control device 100 will be described below with reference to FIG. 4.

The vehicle control device 100 according to various exemplary embodiments of the present disclosure may identify a route from a first location of the vehicle to a second location and an estimated time of arrival when the vehicle will arrive at the second location. For example, the first location may indicate a current location of the vehicle. The second location may indicate a destination at which the vehicle will arrive. The vehicle control device 100 may identify the route and the estimated time of arrival, based on receiving the map information from the external electronic device 101. The estimated time of arrival may include a charging time of the battery 140. However, it is not limited thereto. For example, while controlling the vehicle from the first location to the second location, if identifying the charging time, the vehicle control device 100 may change the estimated time of arrival using the charging time.

The vehicle control device 100 according to various exemplary embodiments of the present disclosure may obtain predicted energy consumption to be consumed while the vehicle is traveling along the route. The vehicle control device 100 may obtain the predicted energy consumption from the external electronic device 101. The predicted energy consumption may be identified, based on road grade information, an average speed, and/or a speed limit of the road in the route. The vehicle control device 100 may obtain the predicted energy consumption corresponding to the route, using the mapping data.

The vehicle control device 100 according to various exemplary embodiments of the present disclosure may divide the route into at least one partial route depending on a change in a speed of the vehicle. The vehicle control device 100 may identify a portion of the predicted energy consumption, which is consumed while the vehicle is traveling along the at least one partial route.

For example, the vehicle control device 100 may identify a predicted load current to be generated from the battery 140 in the at least one partial route, based on the predicted energy consumption (or the portion of the predicted energy consumption). The vehicle control device 100 may improve the accuracy of the predicted energy consumption by use of a portion of the energy consumption, which is predicted in the at least one partial route, rather than all the predicted energy consumption. The predicted load current may indicate electrical energy to be discharged from the battery 140.

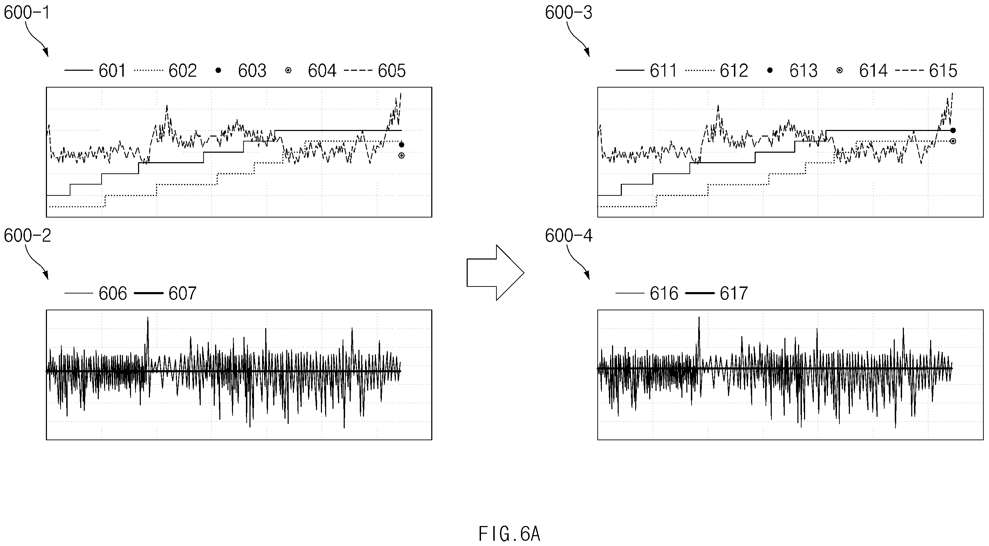

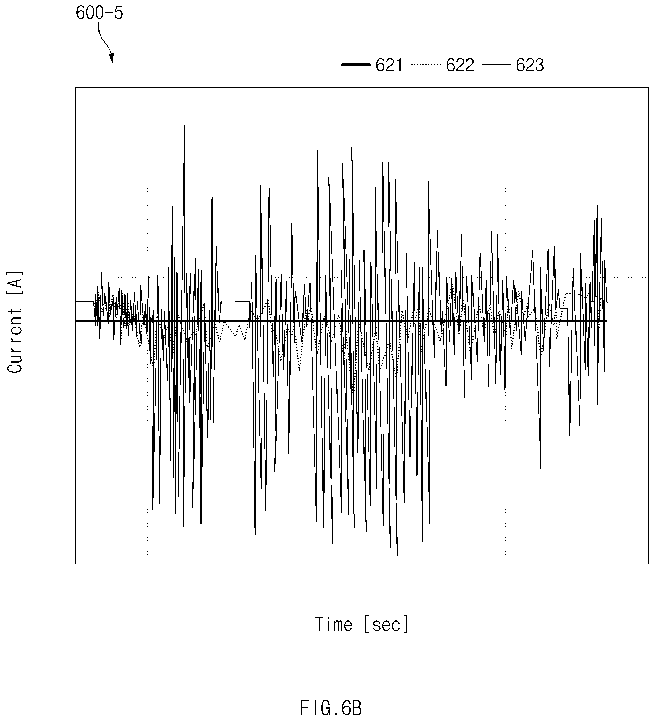

For example, the vehicle control device 100 may further identify a first parameter associated with electrical energy to be charged based on regenerative braking to identify a temperature of the battery 140. The vehicle control device 100 may identify the predicted load current, using the first parameter associated with the electrical energy to be charged based on the regenerative braking, a nominal voltage of the battery 140, the estimated time of arrival, and the predicted energy consumption. For example, the first parameter may be used to improve the accuracy of the predicted load current. The first parameter may be used to compensate for the predicted load current. For example, the nominal voltage of the battery 140 may be associated with a specification of the battery 140. The operation of identifying the predicted load current in the vehicle control device 100 will be described below with reference to FIG. 6A and FIG. 6B.

The vehicle control device 100 according to various exemplary embodiments of the present disclosure may obtain a predicted temperature of the battery 140, which will be identified when the vehicle arrives at the second location, using the outside air temperature, the predicted load current, an initial temperature of the battery 140, which is identified at the first location, or a state of charge (SOC) value of the battery 140, which is identified at the first location, or any combination thereof.

For example, the vehicle control device 100 may identify a predicted temperature of the battery 140, which will be identified at the destination, based on the outside air temperature, the predicted load current, the initial temperature of the battery 140, and/or the SOC value of the battery 140, based on the execution of a battery temperature predictor 121. The vehicle control device 100 may additionally use other parameters to identify the predicted temperature of the battery 140.

For example, the vehicle control device 100 may identify a second parameter and a third parameter, using the predicted load current and the SOC value of the battery 140. The vehicle control device 100 may obtain the second parameter, the third parameter, the outside air temperature, the initial temperature of the battery 140, and/or the predicted temperature of the battery 140.

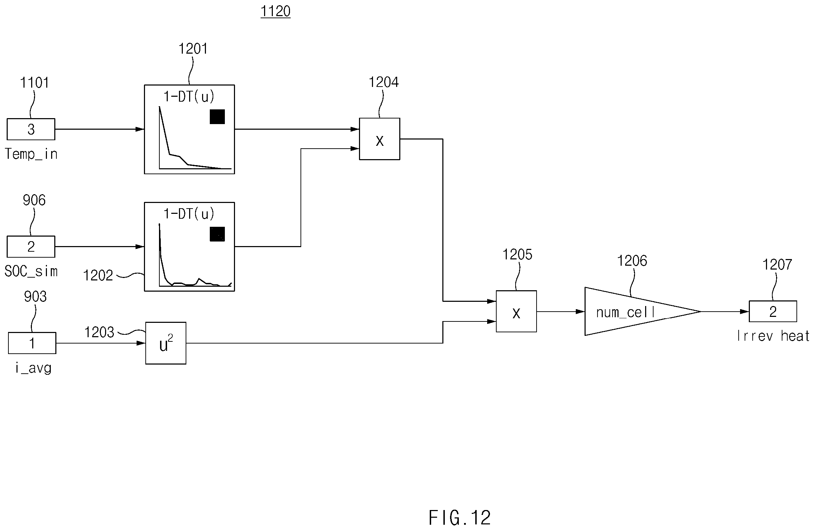

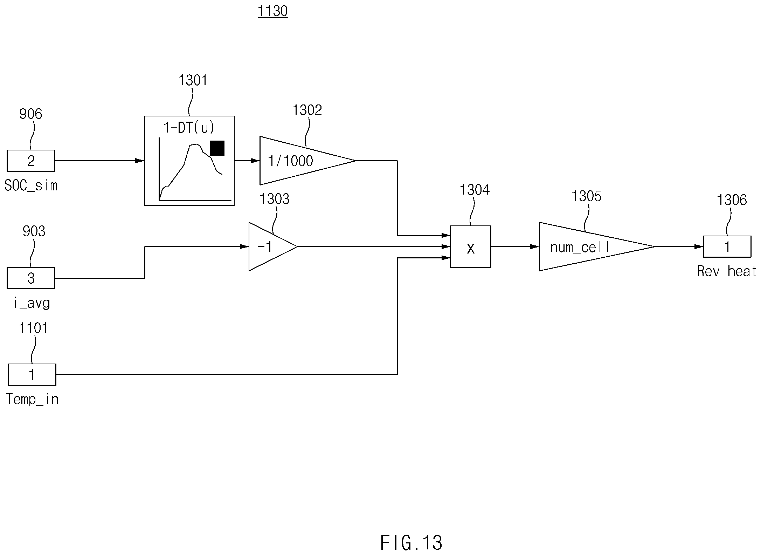

For example, the second parameter may indicate energy lost by internal resistance of the battery 140, using the predicted load current and the SOC value of the battery 140. The second parameter may be obtained based on a relationship between the internal resistance of the battery 140 and the temperature of the battery 140 and a relationship between the internal resistance of the battery 140 and the SOC value of the battery 140. The third parameter may indicate an amount of change in entropy for the battery 140, using the predicted load current and the SOC value of the battery 140. The operation of identifying the second parameter and the second parameter in the vehicle control device 100 will be described below with reference to FIG. 12, and FIG. 13,

For example, the vehicle control device 100 may additionally identify a thermal capacity of the battery 140 and thermal resistance of the battery 140 due to the outside air temperature. For example, the vehicle control device 100 may obtain the predicted temperature of the battery 140, using the second parameter, the third parameter, the initial temperature of the battery 140, the thermal capacity of the battery 140, and the thermal resistance of the battery 140. However, it is not limited thereto.

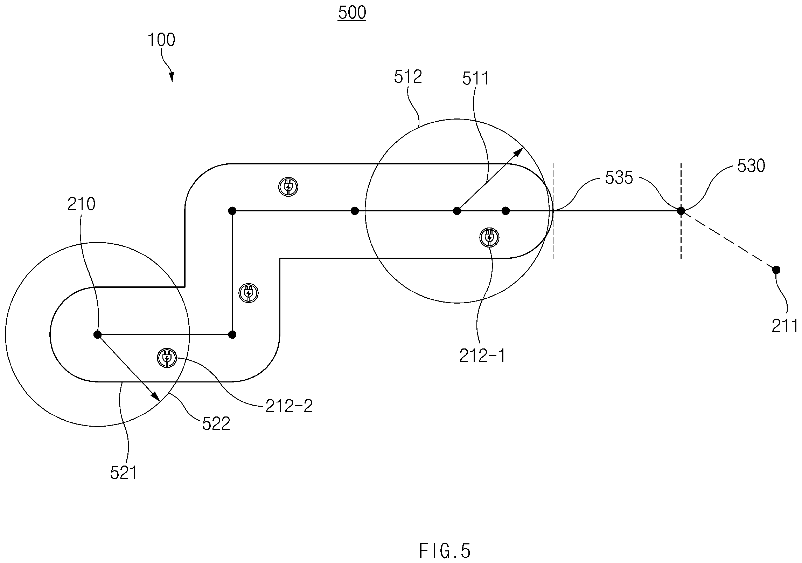

The vehicle control device 100 according to various exemplary embodiments of the present disclosure may obtain a predicted SOC value of the battery 140, which will be identified at the second location (e.g., the destination), based on the execution of a battery SOC predictor 122. For example, if obtaining a predicted SOC which is less than or equal to a specified threshold (e.g., 10%), before the vehicle arrives at the second location, the vehicle control device 100 may identify a charging station (or a charger) for charging the battery 140. The vehicle control device 100 may change the route to move to the identified charging station. However, it is not limited thereto. The operation of identifying the charging station in the vehicle control device 100 will be described below with reference to FIG. 5.

If obtaining a predicted SOC which is less than the specified threshold, the vehicle control device 100 according to various exemplary embodiments of the present disclosure may identify a charging time spent to charge the battery 140. For example, the vehicle control device 100 may identify a charging time, based on the execution of a battery charging time predictor 123. The charging time may be identified based on the temperature of the battery 140 and/or the SOC value of the battery 140. The vehicle control device 100 may change the estimated time of arrival, based on identifying the charging time. For example, if obtaining a predicted SOC which is greater than the specified threshold, the vehicle control device 100 may be configured for controlling the vehicle to move to the second location.

As described above, the vehicle control device 100 according to various exemplary embodiments of the present disclosure may identify a route for moving the current location to the destination. The vehicle control device 100 may be configured to determine whether to charge the battery 140, based on the temperature of the battery 140 and the SOC value of the battery 140 at the current location, based on identifying the route. The vehicle control device 100 may identify a charging station for charging the battery 140, based on performing determination that there is a need to charge the battery 140 while moving the vehicle along the route. The vehicle control device 100 may obtain a predicted temperature of the battery 140, which will be identified if the vehicle arrives at the charging station. The vehicle control device 100 may obtain the predicted temperature, based on the predicted load current. The vehicle control device 100 may be configured to predict a charging time spent to charge the battery 140 to the specified SOC based on the predicted temperature of the battery 140. The vehicle control device 100 may notify a user of the estimated time of arrival including the charging time. The vehicle control device 100 may provide the user with a route for moving to the destination through the charging station from the current location. The vehicle control device 100 may provide a route planning service for providing the user with the estimated time of arrival and the route.

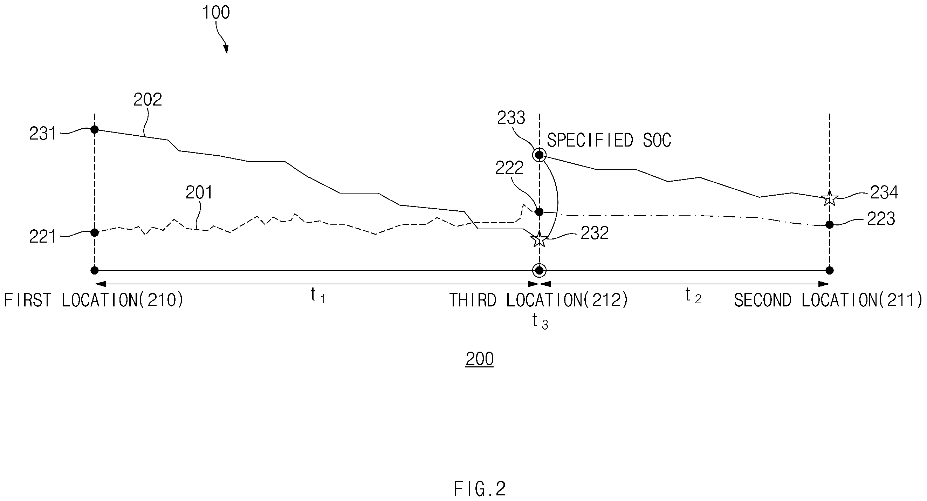

FIG. 2 illustrates an example of a graph 200 for describing an operation of identifying a charging time in a vehicle control device according to an exemplary embodiment of the present disclosure. Referring to FIG. 2, a graph 201 illustrating a temperature of a battery, which will be identified while a vehicle is traveling, and a graph 202 illustrating an SOC value of the battery, which will be identified while the vehicle is traveling, are illustrated.

Referring to FIG. 2, a vehicle control device 100 may identify a route from a first location 210 of the vehicle to a second location 211 and an estimated time of arrival when the vehicle will arrive at the second location 211. The vehicle control device 100 may obtain predicted energy consumption to be consumed while the vehicle is traveling along the route. For example, the vehicle control device 100 may divide the route into at least one partial route depending on a change in a speed of the vehicle. For example, the vehicle control device 100 may identify a predicted load current to be generated from the battery in the at least one divided partial route, based on the predicted energy consumption.

The vehicle control device 100 according to various exemplary embodiments of the present disclosure may obtain a first predicted temperature 223 and/or a third SOC 234 of the battery, which will be identified if the vehicle arrives at the second location 211, using at least one of an outside air temperature, the predicted load current, an initial temperature 221 of the battery, which is identified at the first location 210, or a first SOC 231 of the battery, which is identified at the first location 210, or any combination thereof.

The vehicle control device 100 according to various exemplary embodiments of the present disclosure may identify a drivable distance of the vehicle, based on the first SOC 231 of the battery. If the drivable distance is shorter than a distance from the first location 210 to the second location 211, the vehicle control device 100 may identify a charging station for charging the battery. For example, the vehicle control device 100 may identify a third location 212 indicating a target charging station between the first location 210 and the second location 211. The vehicle control device 100 may identify a second predicted temperature 222 and a second SOC 232 of the battery, which will be identified at the third location 212.

The vehicle control device 100 according to various exemplary embodiments of the present disclosure may identify the second predicted temperature 222 of the battery, which will be identified when the vehicle arrives at the third location 212, based on the predicted load current, the initial temperature 221 of the battery, and the first SOC 231 of the battery. The vehicle control device 100 may be configured to predict the second SOC 232 of the battery at the third location 212, based on the second predicted temperature 222. For example, the vehicle control device 100 may identify a charging time (e.g., t3 of FIG. 2) for charging the battery from the second SOC 232 to a specified SOC 233, using the charging station. The specified SOC 233 may be changed by a user setting. For example, the vehicle control device 100 may adjust the specified SOC 233 so that the SOC value of the battery, which will be identified at the second location 211, is greater than a specified threshold (e.g., 10%). However, it is not limited thereto.

The vehicle control device 100 according to various exemplary embodiments of the present disclosure may identify a first movement time (e.g., t1 of FIG. 2) taken to move from the first location 210 to the third location 212. The vehicle control device 100 may identify a charging time (t3 of FIG. 2) taken to charge the battery to the specified SOC 233 at the third location 212. The vehicle control device 100 may identify a second movement time (e.g., t2 of FIG. 2) taken to move from the third location 212 to the second location 211. The vehicle control device 100 may identify an estimated time of arrival taken to move from the first location 210 to the second location 211, using the first movement time, the second movement time, and/or the charging time. The vehicle control device 100 may display a visual object indicating the estimated time of arrival on its display.

As described above, the vehicle control device 100 according to various exemplary embodiments of the present disclosure may identify a charging station between a current location (e.g., the first location 210 of FIG. 2) of the vehicle and a destination, based on an SOC value of the battery, which will decrease while the vehicle is traveling to the destination (e.g., the second location 211 of FIG. 2). The vehicle control device 100 may be configured to predict a temperature (e.g., the second predicted temperature 222) of the battery and an SOC (e.g., the second SOC 232) of the battery, which will be identified at the charging station. The vehicle control device 100 may identify a charging time (e.g., t2 of FIG. 2) taken to charge the battery based on the temperature of the battery and the SOC value of the battery, which will be identified at the charging station. The vehicle control device 100 may include additionally include the charging time in the movement time taken to move from the first location 210 to the second location 211, thus providing a user with a more accurate estimated time of arrival.

FIG. 3 illustrates an example of a flowchart illustrating an operation of a vehicle control device according to an exemplary embodiment of the present disclosure. Hereinafter, it is assumed that a vehicle control device 100 of FIG. 1 is configured to perform a process of FIG. 3. Furthermore, in a description of FIG. 3, an operation referred to as being performed by a vehicle control device may be understood as being controlled by a processor 110 of the vehicle control device 100. The respective operations of FIG. 3 may be sequentially performed, but are not necessarily sequentially performed. For example, an order of the respective operations may be changed, and at least two operations may be performed in parallel.

Referring to FIG. 3, in S310, the vehicle control device according to various exemplary embodiments of the present disclosure may identify an SOC value of a battery, a temperature of the battery, and an outside air temperature. The vehicle control device may identify an SOC (e.g., a first SOC 231 of FIG. 2) of the battery, and a temperature (e.g., an initial temperature of FIG. 2) of the battery at a current location (e.g., a first location 210 of FIG. 2) of a vehicle. The vehicle control device may receive an outside air temperature from an external electronic device (e.g., an external electronic device 101 of FIG. 1). The vehicle control device may identify the outside air temperature by a sensor. However, it is not limited thereto.

Referring to FIG. 3, in S320, the vehicle control device may obtain energy consumption. The vehicle control device may be configured to predict energy consumption (or predicted energy consumption) necessary to move from the current location of the vehicle to a destination. The vehicle control device may receive information indicating energy consumption from the external electronic device, thus identifying the predicted energy consumption.

Referring to FIG. 3, in S330, the vehicle control device according to various exemplary embodiments of the present disclosure may be configured to predict a temperature of the battery, using a battery temperature predictor. The vehicle control device may be configured to predict a temperature of the battery, which will be identified at the destination. The vehicle control device may divide a route for moving from the current location to the destination into at least one partial route depending on a change in a speed of the vehicle. The vehicle control device may identify a load current, which will be generated in the battery, based on the predicted energy consumption, in the at least one partial route. The vehicle control device may be configured to predict the temperature of the battery, which will be identified at the destination, based on the load current, the outside air temperature, and/or the SOC. However, it is not limited thereto.

Referring to FIG. 3, in S340, the vehicle control device according to various exemplary embodiments of the present disclosure may identify whether there is a charging station in the route. For example, the vehicle control apparatus may identify a drivable distance, based on the SOC value of the battery. If the drivable distance is shorter than a distance from the current location to the destination, the vehicle control device may identify a charging station for charging the battery. The vehicle control device may change the route to move to the destination through the charging station. However, it is not limited thereto.

If there is the charging station in the route (S340 - YES), in S360, the vehicle control device according to various exemplary embodiments of the present disclosure may be configured to predict an SOC value, using a battery SOC predictor. For example, the SOC predicted by the vehicle control device may be an SOC (e.g., a second SOC 233 of FIG. 2), which will be identified at the charging station.

Referring to FIG. 3, in S370, the vehicle control device according to various exemplary embodiments of the present disclosure may be configured to predict a charging time, using a battery charging time predictor. The vehicle control device may identify an SOC (e.g., the second SOC 233 of FIG. 2) and a temperature (e.g., a predicted temperature 222 of FIG. 2), which will be identified if the vehicle arrives at the charging station. The vehicle control device may identify a charging time taken to charge the battery to a specified SOC (e.g., a specified SOC 233 of FIG. 2), based on the SOC value and the temperature of the battery, which will be identified if the vehicle arrives at the charging station.

For example, the vehicle control device may select a charging station, using information associated with a plurality of charging stations from the external electronic device. For example, the information associated with the plurality of charging stations may include at least one of a charging speed, a charging type, a distance from the vehicle for each of a plurality of charging stations, or whether the plurality of charging stations are available, or any combination thereof.

Referring to FIG. 3, in S3 80, the vehicle control device according to various exemplary embodiments of the present disclosure may display a screen indicating the route for moving the current location to the destination, the information related to the charging station, the charging time, and/or the estimated time of arrival on its display.

If there is no charging station in the route (S340 - NO), in S350, the vehicle control device according to various exemplary embodiments of the present disclosure may be configured to predict an SOC value, using the battery SOC predictor. For example, the SOC predicted by the vehicle control device may be an SOC (a third SOC 234 of FIG. 2), which will be identified at the destination. Referring to FIG. 3, in S380, the vehicle control device according to various exemplary embodiments of the present disclosure may display a screen indicating the identified SOC value, the estimated time of arrival indicating a time to arrive at the destination, and/or the route for moving from the current location to the destination on the display.

A processor of an external electronic device (e.g., an external electronic device 101 of FIG. 1) may receive the SOC value of the battery and the temperature of the battery, which are identified in S310, from the vehicle (e.g., the vehicle including the vehicle control device 100). After receiving the SOC value of the battery and the temperature of the battery, the processor of the external electronic device may perform S320 to S370. After performing S350 or S370, the processor of the external electronic device may transmit information indicating a predicted SOC and/or a charging time to the vehicle. The vehicle control device 100 may display a screen indicating the information on the display, based on receiving the information from the external electronic device. However, it is not limited thereto.

Hereinafter, a description will be provided of an operation of displaying a route and information related to the route on the display in the vehicle control device according to an exemplary embodiment with reference to FIG. 4.

FIG. 4 illustrates an example 400 of a screen displayed on a display by a vehicle control device according to an exemplary embodiment of the present disclosure.

Referring to FIG. 4, a vehicle control device 100 according to various exemplary embodiments of the present disclosure may display a screen 410 indicating map information received from an external electronic device on a display 160.

In an exemplary embodiment of the present disclosure, the screen 410 may be generated by an operating system (e.g., a vehicle infotainment system) of the vehicle control device 100. In the screen 410, the vehicle control device 100 may display one or more visual objects (or one or more virtual objects). The visual object may refer to an object deployable in a screen for transmission of information and/or interaction, for example, text, an image, an icon, a video, a button, a checkbox, a radio button, a text box, a slider, and/or a table. The visual object may be referred to as a visual guide, a virtual object, a visual element, a UI element, a view object, and/or a view element.

The vehicle control device 100 according to various exemplary embodiments of the present disclosure may display a visual object 411 indicating a route on the display 160. The visual object 411 indicating the route may be superimposed and displayed on at least a portion of the screen 410 indicating the map information. The visual object 411 may include an icon indicating a location of the vehicle.

For example, while displaying the screen 410, the vehicle control device 100 may receive an input indicating information related to a destination. The vehicle control device 100 may display the visual object 411, based on receiving the input.

The vehicle control device 100 according to various exemplary embodiments of the present disclosure may display a visual object 412, indicating information including a time taken from the current location of the vehicle to the destination, a movement distance from the current location of the vehicle to the destination, and an SOC value of the battery, which will be identified at the destination, on the display 160, based on the input indicating the information related to the destination. The visual object 412 may include a visual object 414 indicating information related to a charging station. The vehicle control device 100 may identify information related to one or more charging stations. For example, the visual object 414 may include a text object 415 indicating an SOC value of the battery and a text object 416 indicating a charging time. For example, the vehicle control device 100 may display a charging time together with text indicating a charging station (or a location of the charging station), based on identifying the route corresponding to the visual object 411. The visual object 414 may include information related to a time when the vehicle will arrive at the charging station. The text object 415 may indicate an SOC value of the battery, which will be identified if the vehicle arrives at the charging station, and a specified SOC. The SOC value of the battery, which will be identified if the vehicle arrives at the charging station, may be referred to as a remaining SOC. The specified SOC may indicate a target amount of charge.

The vehicle control device 100 according to various exemplary embodiments of the present disclosure may identify a distance to the destination, based on identifying the route. If the distance to the destination is longer than a drivable distance based on the SOC value of the battery, the vehicle control device 100 may identify a charging station for charging the battery. The vehicle control device 100 may identify a charging time taken to charge the battery at the charging station, based on a temperature of the battery and an SOC value of the battery, which will be identified at the charging station. The charging time may indicate a charging time taken to charge the battery from the SOC value of the battery, which will be identified at the charging station, to the specified SOC.

The vehicle control device 100 according to various exemplary embodiments of the present disclosure may display a visual object 413 indicating an estimated time of arrival taken to move from the current location to the destination and the movement distance from the current location and the destination. The estimated time of arrival may include a charging time. The movement distance may include a distance from the current location to the charging station and a distance from the charging station to the destination. However, it is not limited thereto. As an exemplary embodiment of the present disclosure, if the vehicle does not pass through the charging station, the estimated time of arrival may fail to include a charging time. As an exemplary embodiment of the present disclosure, if the vehicle does not pass through the charging station, the movement distance may indicate a distance from the current location to the destination.

As described above, the vehicle control device 100 according to various exemplary embodiments of the present disclosure may provide a user with information related to the charging time, using navigation information for moving from the current location to the destination. The vehicle control device 100 may be configured to predict the charging time at a starting time point, using the temperature of the battery and the SOC value of the battery. The vehicle control device 100 may more accurately provide an estimated time of arrival when the vehicle will arrive at the destination by use of the information related to the charging time.

FIG. 5 illustrates an example 500 for describing an operation of identifying a charging station in a vehicle control device according to an exemplary embodiment of the present disclosure.

In an example 500, a vehicle control device 100 may identify a first location 210 indicating a current location of a vehicle and a second location 211 indicating a destination. The vehicle control device 100 may identify a route for moving from the first location 210 to the second location 211.

The vehicle control device 100 according to various exemplary embodiments of the present disclosure may identify an SOC (e.g., a first SOC 231 of FIG. 2) of a battery at the first location 210. The vehicle control device 100 may identify a drivable distance 530 of a vehicle, based on the SOC value of the battery. If a distance from the first location 210 to the second location 211 is longer than the drivable distance 530, the vehicle control device 100 may identify a charging station for charging the battery.

For example, the vehicle control device 100 may identify a third location indicating a location of a charging station, using information associated with a plurality of charging stations, within a distance shorter than the drivable distance 530. The distance shorter than the drivable distance 530 may include a distance shorter than the drivable distance 530 by a buffer distance (or a margin distance) 535. The vehicle control device 100 may set the buffer distance 535 to manage an SOC value of the battery so that the battery of the vehicle is not completely discharged.

In an exemplary embodiment of the present disclosure, the vehicle control device 100 may receive the information associated with the plurality of charging stations from an external electronic device (e.g., an external electronic device 101 of FIG. 1). The plurality of charging stations may include a plurality of charging stations located within a distance adjacent to the route. For example, the information associated with the plurality of charging stations may include at least one of a charging speed, a charging type, a distance from the vehicle for each of charging stations, or whether the plurality of charging stations are available, or any combination thereof.

The vehicle control device 100 according to various exemplary embodiments of the present disclosure may identify a charging station 212-1 located within the distance shorter than the drivable distance 530, using the information associated with the plurality of charging stations. The vehicle control device 100 may identify the charging station 212-1 located in an area 512 based on a first radius 511, within the distance shorter than the drivable distance 530. The vehicle control device 100 may set the first radius 511 to match the distance shorter than the drivable distance 530. The vehicle control device 100 may identify a reference point within the route. The reference point may be located in a distance shorter than a length obtained by adding the buffer distance 535 and the first radius 511, in the drivable distance 530. However, it is not limited thereto.

If there is no charging station 212-1 in the area 512, the vehicle control device 100 according to various exemplary embodiments of the present disclosure may identify an area 522 with a second radius 521, with respect to the first location 210. The vehicle control device 100 may identify a charging station 212-2 located in the area 522.

The vehicle control device 100 according to various exemplary embodiments of the present disclosure may identify a charging time based on a temperature of the battery and an SOC value of the battery, which will be identified if the vehicle arrives at a third location indicating the charging station 212-1 or the charging station 212-2, based on identifying the third location. The vehicle control device 100 may display a visual object indicating the charging time together with text indicating the third location on its display. The visual object displayed by the vehicle control device 100 may be referred to a visual object 414 of FIG. 4.

FIG. 6A and FIG. 6B illustrate an example of a graph for describing a load current identified based on energy consumption by a vehicle control device according to an exemplary embodiment of the present disclosure. A vehicle control device of FIG. 6A and FIG. 6B may be referred to a vehicle control device 100 of FIG. 1.

Referring to FIG. 6A, a graph 600-1 and a graph 600-3 indicating a temperature over time and a graph 600-2 and a graph 600-4 indicating a current over time are illustrated.

In an exemplary embodiment of the present disclosure, the graph 600-2 may include a graph 606 illustrating a load current identified while a vehicle is traveling and a graph 607 illustrating a load current to be predicted while the vehicle is traveling. For example, the vehicle control device may be configured to predict a load current based on predicted energy consumption, a nominal voltage of a battery, and/or an estimated time of arrival. The predicted load current may be represented as the graph 607.

Referring to FIG. 6A, the graph 600-1 may include a graph 601 illustrating a maximum temperature of the battery, which is identified while the vehicle is traveling, a graph 602 illustrating a minimum temperature of the battery, which is identified while the vehicle is traveling, and/or a graph 605 illustrating an outside air temperature identified while the vehicle is traveling.

Referring to the graph 600-1, for example, the vehicle control device may be configured to predict the maximum temperature of the battery and the minimum temperature of the battery, which will be identified at a destination (e.g., a second location 211 of FIG. 2) of the vehicle, at a current location (e.g., a first location 210 of FIG. 2) of the vehicle, using a load current corresponding to the graph 607. The load current corresponding to the graph 607 may be identified based on predicted energy consumption identified based on an average speed (or a speed limit) corresponding to a route of the vehicle. For example, the predicted maximum temperature of the battery may be represented as a point 603 on the graph 601-1. For example, the predicted minimum temperature of the battery may be represented as a point 604 on the graph 601-1.

Referring to the graph 600-1, because the vehicle control device does not use a parameter indicating electrical energy of the battery, which will be charged based on regenerative braking while the vehicle is traveling, the identified maximum temperature (e.g., the graph 601) or the identified minimum temperature (e.g., the graph 602) of the battery and the predicted maximum temperature (e.g., the point 603) or the predicated minimum temperature (e.g., the point 604) of the battery may fail to match with each other.

The vehicle control device according to various exemplary embodiments of the present disclosure may be configured to predict a load current based on predicted energy consumption, a nominal voltage of the battery, an estimated time of arrival, and a parameter indicating electrical energy of the battery, which will be charged based on regenerative braking. For example, a graph 600-4 may include a graph 617 illustrating the predicted load current and a graph 616 illustrating a load current identified while the vehicle is traveling. The graph 617 may illustrate a load current obtained by compensating for (or correcting) the load current corresponding to the graph 607 based on the parameter.

The vehicle control device 100 according to various exemplary embodiments of the present disclosure may identify a load current, using Equation 1 below.

[Equation 1]

$$i_{avg} = ((E * 10/36/Pck)/(Time/60)) * \alpha$$

Referring to Equation 1 above, for example, $i_{avg}$ may indicate the load current to be identified while the vehicle is traveling along the route. For example, $E$ may indicate the predicted energy consumption corresponding to the route. $Pck$ may indicate the nominal voltage of the battery. The vehicle control device may identify the nominal voltage of the battery, using information associated with the battery. The information associated with the battery may include a voltage of the battery (e.g., a magnitude of power generated by the battery), a current of the battery, a capacity of the battery, a discharge rate of the battery, a charging time of the battery, a material of the battery, cycle life of the battery, and/or an operation temperature range of the battery. For example, $Time$ may indicate the estimated time of arrival when the vehicle will arrive at the destination, after the vehicle travels along the route. $\alpha$ may refer to the parameter indicating the electrical energy predicted as being obtained while the vehicle is traveling along the route based on regenerative braking. The parameter may be referred to as a regenerative braking amount compensation parameter.

For example, a graph 600-3 may include a graph 611 illustrating a maximum temperature of the battery, which is identified while the vehicle is traveling, a graph 612 illustrating a minimum temperature of the battery, which is identified while the vehicle is traveling, and/or a graph 615 illustrating an outside air temperature of the vehicle, which is identified while the vehicle is traveling.

Referring to the graph 600-3, the vehicle control device according to various exemplary embodiments of the present disclosure may be configured to predict a temperature of the battery, using the load current corresponding to the graph 617. For example, the vehicle control device may be configured to predict a point 613 indicating the maximum temperature of the battery at the destination and a point 614 indicating the minimum temperature of the battery.

Referring to the graph 600-3, it may be seen that the graph 611 indicating the identified maximum temperature of the battery and the point 613 indicating the predicted maximum temperature of the battery match with each other. Referring to the graph 600-3, it may be seen that the graph 612 indicating the identified minimum temperature of the battery and the point 614 indicating the predicted minimum temperature of the battery match with each other.

As described above, the vehicle control device may more accurately predict the temperature of the battery, which will be identified at the destination, using the regenerative braking amount compensation parameter (e.g., α of Equation 1 above).

Hereinafter, a description will be provided of an operation of calculating a load current using predicted energy consumption identified in at least one of partial route included in the route by the vehicle control device with reference to FIG. 6B.

Referring to FIG. 6B, a graph 600-5 may indicate a current over time. For example, the vehicle control device may identify a route for moving from a current location of the vehicle to a destination of the vehicle. The vehicle control device may divide the route into at least one partial route based on a change in a speed of the vehicle. The vehicle control device may be configured to determine a load current corresponding to the at least one partial route.

Referring to the graph 600-5, the graph 600-5 may include a graph 623 illustrating a load current predicted using predicted energy consumption corresponding to the entire route, a graph 622 illustrating a load current predicted using a portion of predicted energy consumption, which corresponds to the at least one partial route, and a graph 621 illustrating a load current identified while the vehicle is traveling along the route. The graph 621 may illustrate a value obtained by measuring a load current generated in an actual battery. However, it is not limited thereto.

Referring to the graph 600-5, it may be seen that the shape of the graph 622 is more similar to the shape of the graph 621 indicating an actual load current value than the shape of the graph 623. In other words, the vehicle control device may be configured to predict the load current using a portion of energy consumption, which corresponds to the at least one partial route, thus more accurately determining the load current.

AS described above, the vehicle control device 100 according to various exemplary embodiments of the present disclosure may more accurately predict the temperature of the battery, which will be identified at the destination, using the load current corresponding to the graph 622.

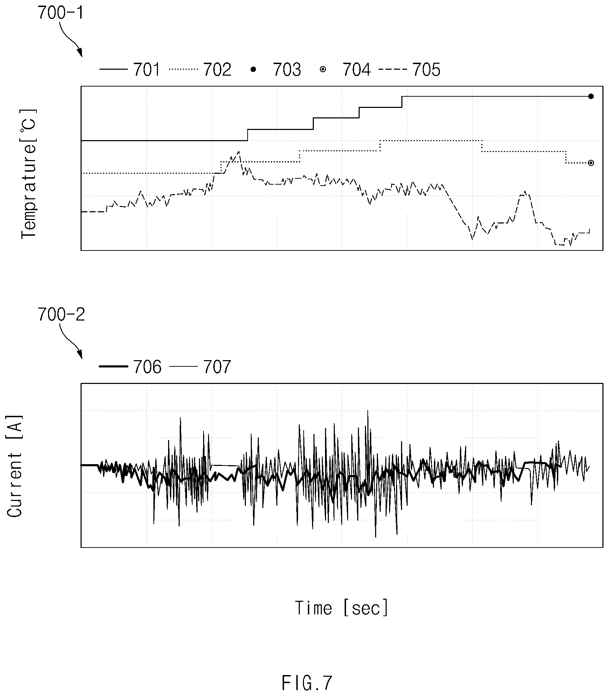

FIG. 7 illustrates an example of a graph for describing a temperature of a battery, which is identified based on current consumption by a vehicle control device, according to an exemplary embodiment of the present disclosure. Referring to FIG. 7, a 700-1 may include a graph 701 illustrating a maximum temperature of the battery, which is identified while a vehicle is traveling, a graph 702 illustrating a minimum temperature of the battery, which is identified while the vehicle is traveling, and a graph 705 illustrating an outside air temperature of the vehicle, which is identified while the vehicle is traveling. A graph 700-2 may be referred to a graph 600-5 of FIG. 6B. The graph 700-2 may include a graph 706 illustrating a load current identified while the vehicle is traveling along a route and a graph 707 illustrating a value obtained by predicting a load current to be identified while the vehicle is traveling along the route. The graph 707 may indicate a load current (e.g., $i_{avg}$ of FIG. 1) determined using Equation 1 above by the vehicle control device.

Referring to the graph 700-1, it may be seen that the graph 701 illustrating an actual value of the maximum temperature of the battery and a point 703 indicating a maximum temperature of the battery, which will be identified at a destination, match with each other. Referring to the graph 700-1, it may be seen that the graph 702 illustrating an actual value of the minimum temperature of the battery and a point 704 indicating the minimum temperature of the battery, which will be identified at the destination, match with each other. The vehicle control device may be configured to determine the load current to be generated for each of partial routes included in the route, thus more accurately predicting a temperature of the battery, which will be identified at the destination.

As described above, the vehicle control device according to various exemplary embodiments of the present disclosure may more accurately predict the charging time spent to charge the battery, based on the predicted temperature of the battery and the SOC value of the battery.

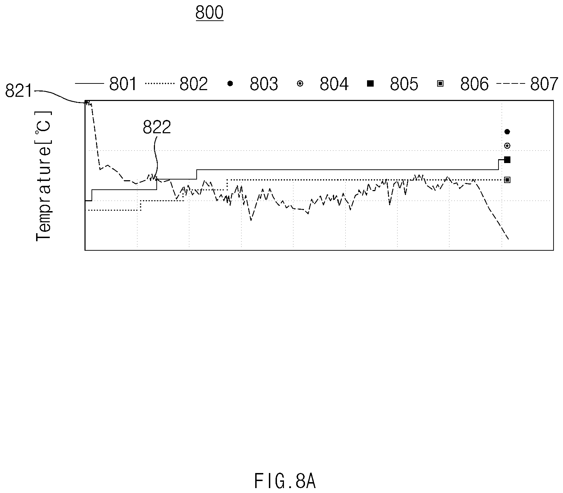

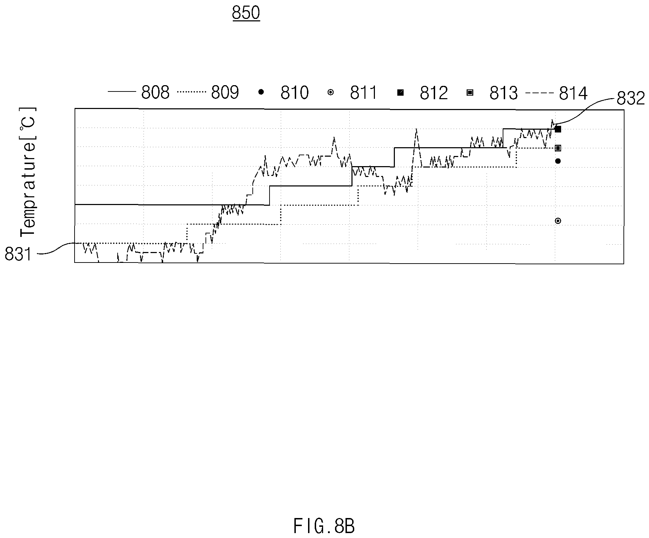

Hereinafter, a description will be provided in detail below of an operation of using an outside air temperature to predict a temperature of the battery in the vehicle control device with reference to FIGS. 8A and 8B.

FIG. 8A and FIG. 8B illustrate an example of a graph for describing an outside air temperature used to identify a temperature of a battery by a vehicle control device according to an exemplary embodiment of the present disclosure. A vehicle control device of FIG. 8A and FIG. 8B may be referred to a vehicle control device 100 of FIG. 1. A graph 800 of FIG. 8A may indicate a temperature over time. A graph 850 of FIG. 8B may indicate a temperature over time.

The graph 800 may include a graph 801 illustrating a maximum temperature of the battery, which is identified while a vehicle is traveling, a graph 802 illustrating a minimum temperature of the battery, which is identified while the vehicle is traveling, and a graph 807 illustrating an outside air temperature identified while the vehicle is traveling. If the vehicle is disposed at a specified location during a specified time, the graph 807 may indicate an outside air temperature of the vehicle, which is identified by the vehicle.

Referring to FIG. 8A, the vehicle control device according to various exemplary embodiments of the present disclosure may identify a first outside air temperature 821 at a first location (e.g., a first location 210 of FIG. 2) of the vehicle. The first outside air temperature 821 may be identified based on a sensor of the vehicle. For example, the vehicle control device may obtain a second outside air temperature 822 corresponding to the location of the vehicle which is traveling from an external electronic device (e.g., an external electronic device 101 of FIG. 1), while the vehicle is traveling along a route.

For example, if a difference between the first outside air temperature 821 and the second outside air temperature 822 is greater than or equal to a first threshold, the vehicle control device may obtain a predicted temperature of the battery, using at least one of the second outside air temperature 822, a predicted load current (e.g., a load current corresponding to a graph 700-2), an initial temperature of the battery, or an SOC value of the battery, or any combination thereof. The predicted temperature of the battery may include a predicted maximum temperature of the battery and a predicted minimum temperature of the battery. The predicted maximum temperature of the battery may be represented as a point 805. The predicted minimum temperature of the battery may be represented as a point 806.

For example, if the difference between the first outside air temperature 821 and the second outside air temperature 822 is greater than or equal to the first threshold, the predicted temperature of the battery, which is predicted using the first outside air temperature 821 by the vehicle control device, may include a maximum temperature of the battery, which corresponds to a point 803, and a minimum temperature of the battery, which corresponds to a point 804.

For example, if the difference between the first outside air temperature 821 and the second outside air temperature 822 is less than the first threshold, the vehicle control device may obtain a predicted temperature of the battery, using at least one of the first outside air temperature 821, a predicted load current, the initial temperature of the battery, or the SOC value of the battery, or any combination thereof.

As described above, if the difference between the first outside air temperature 821 and the second outside air temperature 822 is greater than or equal to the first threshold, the vehicle control device may be configured to predict the temperature of the battery based on the second outside air temperature 822 rather than the first outside air temperature 821, thus predicting a value which is more accurate than the temperature of the battery, which is predicted based on the first outside air temperature 821.

Referring to FIG. 8B, in an exemplary embodiment of the present disclosure, a graph 850 may include a graph 808 illustrating a maximum temperature of the battery, which is identified while a vehicle is traveling, a graph 809 illustrating a minimum temperature of the battery, which is identified while the vehicle is traveling, and a graph 814 illustrating an outside air temperature of the vehicle, which is identified while the vehicle is traveling.

The vehicle control device according to various exemplary embodiments of the present disclosure may identify a third outside air temperature 831 at a first location (e.g., a current location of the vehicle). The vehicle control device may obtain a fourth outside air temperature 832 indicating a temperature at a second location (e.g., a destination) at an estimated time of arrival. If a difference between the third outside air temperature 831 and the fourth outside air temperature 832 is greater than or equal to a second threshold, the vehicle control device may identify a predicted temperature of the battery, which will be identified at the second location, based on the fourth outside air temperature 832, the predicted load current, the initial temperature of the battery, and/or the SOC value of the battery. The predicted temperature of the battery, which is identified based on the fourth outside air temperature 832 by the vehicle control device, may include a maximum temperature of the battery, which corresponds to a point 812, and a minimum temperature of the battery, which corresponds to a point 813.

If the difference between the third outside air temperature 831 and the fourth outside air temperature 832 is greater than or equal to the second threshold, the predicted temperature of the battery, which is obtained using the third outside air temperature 831, may include a maximum temperature of the battery, which corresponds to a point 810, and a minimum temperature of the battery, which corresponds to a point 811.

Referring to the graph 850, it may be seen than the point 812 between the point 810 and the point 812 matches the graph 808 illustrating the identified maximum temperature of the battery. Referring to the graph 850, it may be seen than the point 813 between the point 811 and the point 813 matches the graph 809 illustrating the identified minimum temperature of the battery. In other words, if a difference in temperature between the first location and the second location is greater than the second threshold like the graph 814, the vehicle control device may more accurately predict the temperature of the battery, which will be identified at the second location, using the outside air temperature to be identified at the second location.

For example, if the difference between the third outside air temperature 831 and the fourth outside air temperature 832 is less than the second threshold, the vehicle control device may obtain a predicted temperature of the battery, which will be identified at the second location, based on the third outside air temperature 831, the predicted load current, the initial temperature of the battery, and/or the SOC value of the battery.

As described above, the vehicle control device according to various exemplary embodiments of the present disclosure may select the outside air temperature to more accurately predict the temperature of the battery, which will be identified at the destination of the vehicle, at the current location of the vehicle. The vehicle control device may more accurately predict the temperature of the battery, which will be identified at the destination, based on selecting the outside air temperature. The vehicle control device may more accurately predict the temperature of the battery, thus more accurately identifying a charging time to be spent to charge the battery.

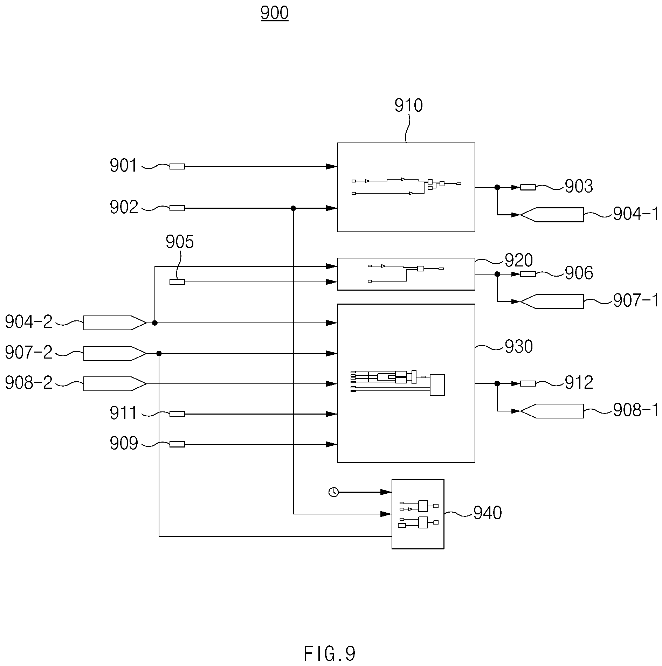

FIG. 9 illustrates an example 900 of a battery temperature predictor for identifying a temperature of a battery of a vehicle control device according to an exemplary embodiment of the present disclosure. A vehicle control device of FIG. 9 may be referred to a vehicle control device 100 of FIG. 1. In an example 900, the battery temperature predictor may be referred to a battery temperature predictor 121 of FIG. 1.

Referring to FIG. 9, the battery temperature predictor may include a circuit 910 for determining a load current, a circuit 920 for predicting an approximate SOC value, a circuit 930 for determining a temperature of a battery at a destination, and/or a circuit 940 for preventing a data value from diverging.

The vehicle control device according to various exemplary embodiments of the present disclosure may obtain a predicted load current 903 from the circuit 910 to which predicted energy consumption 901 and an estimated time of arrival 902 are input. The predicted load current 903 may be input to an input circuit 904-1. The vehicle control device may obtain the predicted load current 903 from the circuit 910 configured based on Equation 1 above. The input circuit 904-1 may be referred to an input circuit 904-2.

The vehicle control device according to various exemplary embodiments of the present disclosure may obtain SOC sim 906 indicating a relationship between an SOC value and a heating value from the circuit 920 to which an SOC (or an initial SOC) 905 of the battery, which is identified at a current location of the vehicle, and the predicted load current 903 output from the input circuit 904-2 are input. The SOC sim 906 may be input to an input circuit 907-1. The input circuit 907-1 may be referred to an input circuit 907-2.

The vehicle control device according to various exemplary embodiments of the present disclosure may obtain a predicted temperature 912 of the battery, which will be identified at the destination, from the circuit 930 to which the predicted load current 903 output from the input circuit 904-2, the SOC sim 906 output from the input circuit 907-2, data output from a feedback circuit 908-2, an outside air temperature 911, and/or an initial temperature 909 of the battery are input. The predicted temperature 912 may be input to a feedback circuit 908-1. The feedback circuit 908-1 may be referred to the feedback circuit 908-2. Data output from the feedback circuit may be referred to as feedback data. The vehicle control device may be configured to predict a predicted temperature of the battery, which will be identified at the destination, in real time while the vehicle is traveling along the route using feedback data.

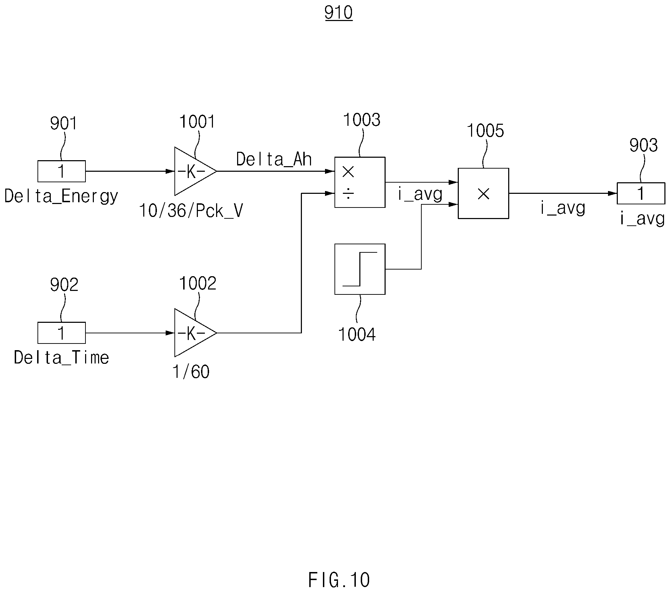

Hereinafter, a description will be provided in detail below of an operation of identifying a predicted load current in the vehicle control device with reference to FIG. 10.

FIG. 10 illustrates an example of a load current predictor for identifying a load current of a battery of a vehicle control device according to an exemplary embodiment of the present disclosure. A vehicle control device of FIG. 10 may be referred to a vehicle control device 100 of FIG. 1.

Referring to FIG. 10, an example of a circuit 910 (or a load current predictor) for determining a load current is illustrated. A relationship between input data and an operator included in the circuit 910 may indicate Equation 1 above.

The vehicle control device according to various exemplary embodiments of the present disclosure may obtain a parameter indicating a current, using predicted energy consumption 901 and a nominal voltage 1001 of a battery. The predicted energy consumption 901 may include energy consumption corresponding to at least one partial route.

The vehicle control device according to various exemplary embodiments of the present disclosure may synthesize a parameter obtained using an estimated time of arrival 902 and an operator 1002 for changing a unit and a parameter indicating a current by an operator 1003. The vehicle control device may synthesize the synthesized composite parameter and a signal generator function 1004 by an operator 1005 to obtain a predicted load current 903.

The vehicle control device according to various exemplary embodiments of the present disclosure may further include a component, for using a parameter (e.g., $\alpha$ of Equation 1 above) indicating electrical energy predicted as being obtained while a vehicle is traveling along a route based on regenerative braking, in the circuit 910. However, it is not limited thereto.

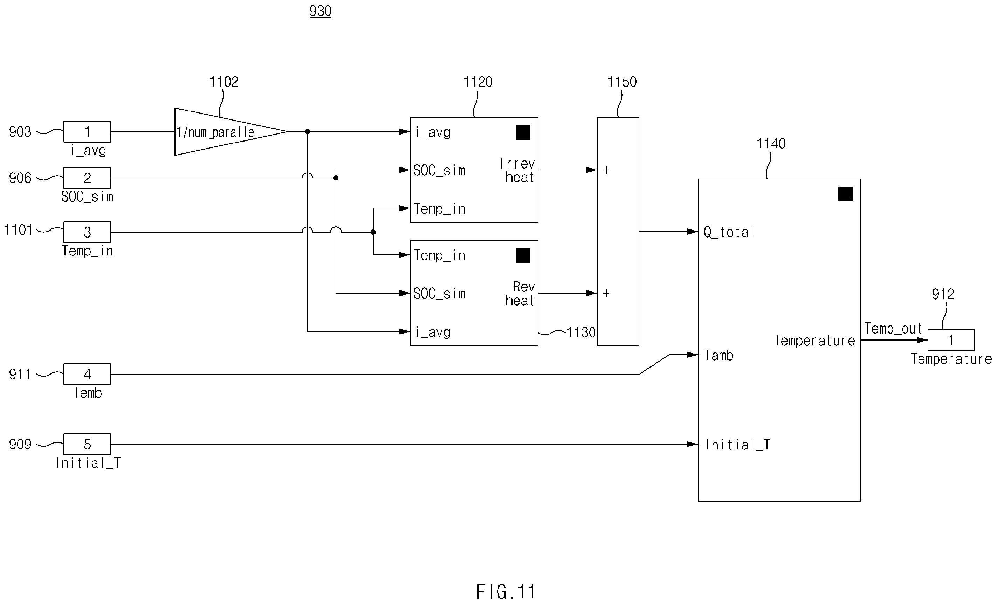

FIG. 11 illustrates an example of a battery temperature predictor for identifying a temperature of a battery of a vehicle control device according to an exemplary embodiment of the present disclosure. A circuit 930 of FIG. 11 may be referred to a circuit 930 of FIG. 9. The circuit 930 may be included in the battery temperature predictor. A vehicle control device of FIG. 11 may be referred to a vehicle control device 100 of FIG. 1.

The vehicle control device according to various exemplary embodiments of the present disclosure may identify parameters, using a predicted load current 903 and an SOC value of a battery. For example, the vehicle control device may identify parameters, using the predicted load current 903, SOC sim 906, and/or feedback data 1101. The feedback data 1101 may indicate data output from a feedback circuit 908-2 of FIG. 9.

The vehicle control device according to various exemplary embodiments of the present disclosure may input the SOC sim 906 and/or the feedback data 1101 to a circuit 1120 and a circuit 1130. The vehicle control device may change the predicted load current 903 by an operator 1102 indicating a parallel number and may then input the changed predicted load current to the circuit 1120 and the circuit 1130. The operator 1102 indicating the parallel number may indicate a function for using a parallel number of one or more unit cells included in the battery.

The vehicle control device according to various exemplary embodiments of the present disclosure may obtain a second parameter from the circuit 1120 to which the predicted load current 903, the SOC sim 906, and/or the feedback data 1101 are input. For example, the second parameter may indicate energy lost by internal resistance of the battery. For example, the circuit 1120 may include a circuit for indicating irreversible heat associated with the battery. A description of the circuit 1120 will be described in detail below with reference to FIG. 12.

The vehicle control device according to various exemplary embodiments of the present disclosure may obtain a third parameter from the circuit 1130 to which the predicted load current 903, the SOC sim 906, and/or the feedback data 1101 are input. The third parameter may indicate an amount of change in entropy for the battery. The circuit 1130 may include a circuit for indicating reversible heat associated with the battery. The circuit 1130 may be used to indicate energy lost through a wire. However, it is not limited thereto. A description of the circuit 1130 will be described in detail below with reference to FIG. 13.

The vehicle control device according to various exemplary embodiments of the present disclosure may obtain a predicted temperature 912 of the battery, using at least one of the second parameter, the third parameter, an outside air temperature 911, or an initial temperature 909 of the battery, or any combination thereof.

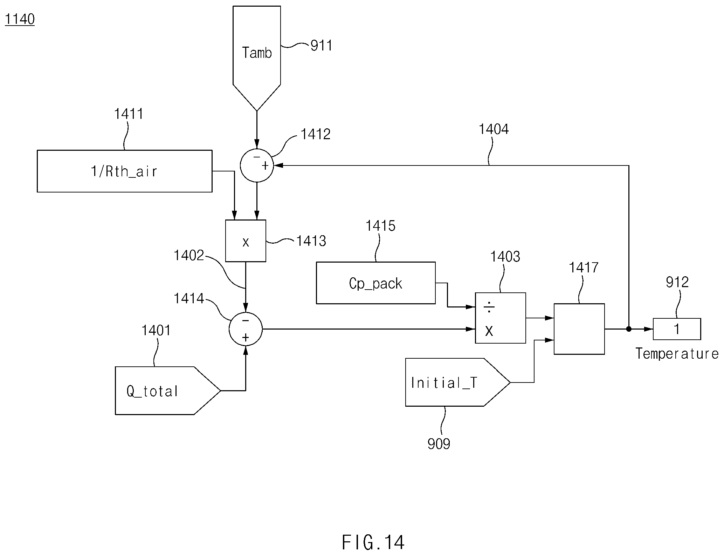

The vehicle control device according to various exemplary embodiments of the present disclosure may synthesize the second parameter and the third parameter by a circuit 1150 to obtain a fourth parameter (e.g., Q_total of FIG. 11). The vehicle control device may input the fourth parameter to a circuit 1140. For example, the circuit 1140 may include a circuit for using cooling performance of the battery. A description of the circuit 1140 will be described in detail below with reference to FIG. 14.

The vehicle control device according to various exemplary embodiments of the present disclosure may obtain the predicted temperature 912 of the battery from the circuit 1140 to which the fourth parameter, the outside air temperature 911, and/or the initial temperature 909 of the battery are input.

FIG. 12 illustrates an example of a circuit for identifying irreversible heat for a battery in a vehicle control device according to an exemplary embodiment of the present disclosure. Referring to FIG. 12, an example of a circuit 1120 of FIG. 11 is illustrated. A vehicle control device of FIG. 12 may be referred to a vehicle control device 100 of FIG. 1.

The vehicle control device according to various exemplary embodiments of the present disclosure may be configured to determine (or change) feedback data 1101, using a function 1201 indicating a relationship between internal resistance of a battery and a temperature of the battery. For example, because the feedback data 1101 includes data indicating a predicted temperature (e.g., a predicted temperature 912 of FIG. 9), the determined feedback data may include information indicating the relationship between the internal resistance of the battery and the temperature of the battery. The function 1201 may be in a form of a one-dimensional map.

The vehicle control device according to various exemplary embodiments of the present disclosure may be configured to determine (or change) SOC sim 906, using a function 1202 indicating a relationship between the internal resistance of the battery and an SOC value of the battery. The function 1202 may be in a form of a one-dimensional map.

The vehicle control device according to various exemplary embodiments of the present disclosure may change a predicted load current 903 by an operator 1203 for squaring a data value.

The vehicle control device according to various exemplary embodiments of the present disclosure may be configured to determine the determined feedback data, the determined SOC_sim, and/or the changed predicted load current by operators 1204 and 1205 (e.g., multiplication) and an operator 1206 indicating the number of battery cells to obtain a second parameter 1207. In other words, the second parameter 1207 may be obtained based on the relationship between the internal resistance of the battery and the temperature of the battery and the relationship between the internal resistance of the battery and the SOC value of the battery. The second parameter (e.g., Irrev Heat of FIG. 12) 1207 may include information indicating irreversible heat.

In an exemplary embodiment of the present disclosure, a relationship between the data and the operators included in the circuit 1120 may be represented as Equation 2 below.

[Equation 2]

$$Q_{irrev} = i^2 R(SOC, T) * num\_cell$$

Referring to Equation 2, $Q_{irrev}$ may indicate the second parameter 1207. $i$ may indicate the predicted load current 903. $R$ may indicate the internal resistance of the battery. $SOC$ may indicate the SOC sim 906. $T$ may indicate the feedback data 1101. $num\_cell$ may indicate the number of battery cells. The vehicle control device may obtain the second parameter 1207, using Equation 3 below.

FIG. 13 illustrates an example of a circuit for identifying reversible heat for a battery in a vehicle control device according to an exemplary embodiment of the present disclosure. Referring to FIG. 13, an example of a circuit 1130 of FIG. 11 is illustrated. A vehicle control device of FIG. 13 may be referred to a vehicle control device 100 of FIG. 1.

Referring to FIG. 13, the vehicle control device according to various exemplary embodiments of the present disclosure may change SOC sim 906, using a function 1301 and an operator 1302. The function 1031 may include a function for considering a chemical characteristic of a battery. The function 1301 may be used to indicate a potential value between battery electrodes. The function 1301 may be used to indicate an amount of change in entropy associated with the battery. The operator 1302 may be used to change a unit. In an exemplary embodiment of the present disclosure, the vehicle control device may change a sign (e.g., +) of a predicted load current 903 by an operator 1303.

Referring to FIG. 13, the vehicle control device according to various exemplary embodiments of the present disclosure may synthesize the changed SOC sim, the predicted load current, the sign of which changes, and/or feedback data 1101 by an operator 1304 (e.g., multiplication) to obtain a data value. The vehicle control device may be configured to determine the data value by an operator 1305 indicating the number of battery cells to obtain a third parameter 1306 (e.g., Rev Heat of FIG. 13).

In an exemplary embodiment of the present disclosure, a relationship between the data and the operators included in the circuit 1130 may be represented as Equation 3 below.

[Equation 3]

$$Q_{rev} = iT\frac{dU}{dT}(SOC) * num\_cell$$

Referring to Equation 3 above, for example, $Q_{rev}$ may indicate the third parameter 1306. For example, $i$ may indicate the predicted load current 903. For example, $T$ may indicate the feedback data 1101. For example, $\frac{dU}{dT}$ may indicate the function 1301. For example, $SOC$ may indicate the SOC sim 906. For example, $num\_cell$ may indicate the operator 1305. The vehicle control device may obtain the third parameter 1306, using Equation 3 above.

FIG. 14 illustrates an example of a circuit for identifying a predicted temperature of a battery in a vehicle control device according to an exemplary embodiment of the present disclosure. Referring to FIG. 14, an example of a circuit 1140 of FIG. 9 is illustrated. A vehicle control device of FIG. 14 may be referred to a vehicle control device 100 of FIG. 1.

The vehicle control device according to various exemplary embodiments of the present disclosure may additionally identify thermal capacity 1415 of a battery and thermal resistance of the battery by an outside air temperature. For example, the vehicle control device may obtain a predicted temperature 912 of the battery, using at least one of a second parameter (e.g., a second parameter 1207 of FIG. 12), a third parameter (e.g., a third parameter 1306 of FIG. 13), or an initial temperature 909 of the battery, or any combination thereof, the thermal capacity 1415 of the battery, and the thermal resistance 1411 of the battery.

In an exemplary embodiment of the present disclosure, the vehicle control device may synthesize the second parameter (e.g., the second parameter 1207 of FIG. 12) and the third parameter (e.g., the third parameter 1306 of FIG. 13) by a circuit 1150 of FIG. 11 to obtain a composite parameter 1401.

In an exemplary embodiment of the present disclosure, the vehicle control device may be configured to determine an outside air temperature 911, the thermal resistance 1411, and/or feedback data 1404 using operators 1412 and 1413 to obtain a first calculation parameter 1402. The first calculation parameter 1402 may indicate heat generation associated with an outside air temperature. The vehicle control device may obtain the first calculation parameter 1402, using Equation 4 below.

[Equation 4]

$$Q_{air} = (T_{n-1} - T_{amb})/R_{th\_air}$$

Referring to Equation 4 above, for example, $Q_{air}$ may indicate the first calculation parameter 1402. For example, $T_{n-1}$ may indicate the feedback data 1404. For example, $T_{amb}$ may indicate the SOC sim 911. For example, $R_{th\_air}$ may indicate the thermal resistance 1411.

The vehicle control device according to various exemplary embodiments of the present disclosure may be configured to determine the composite parameter 1401, the calculation parameter 1402, and/or the thermal capacity 1415 using operators 1414 and 1416 to obtain a second calculation parameter 1403. The vehicle control device may obtain the second calculation parameter 1403, using Equation 5 below.

[Equation 5]

$$T_n = (Q_{total} - Q_{air})/C_{p\_pack}$$

Referring to Equation 5 above, for example, $T_n$ may indicate the second calculation parameter 1403. For example, $Q_{total}$ may indicate the composite parameter 1401. For example, $Q_{air}$ may indicate the first calculation parameter 1402. For example, $C_{p\_pack}$ may indicate the thermal capacity 1415.

The vehicle control device according to various exemplary embodiments of the present disclosure may be configured to determine the second calculation parameter 1403 and the initial temperature 909, using an operator 1417, to obtain a predicted temperature 912 of the battery. Based on obtaining the predicted temperature 912 of the battery, the vehicle control device may obtain an SOC (or a remaining SOC) of the battery and/or a charging time of the battery, when a vehicle arrives at a destination (or a charging station). The vehicle control device may display the SOC value of the battery and/or the charging time of the battery on its display to provide a user with the SOC value of the battery and/or the charging time of the battery.

FIG. 15 illustrates an example of a flowchart illustrating a vehicle control method according to an exemplary embodiment of the present disclosure. Hereinafter, it is assumed that a vehicle control device 100 of FIG. 1 is configured to perform a process of FIG. 15. Furthermore, in a description of FIG. 15, an operation referred to as being performed by a device may be understood as being controlled by a processor 110 of the vehicle control device 100. The respective operations of FIG. 15 may be sequentially performed, but are not necessarily sequentially performed. For example, an order of the respective operations may be changed, and at least two operations may be performed in parallel.

Referring to FIG. 15, the vehicle control device according to various exemplary embodiments of the present disclosure may include S 1510 for identifying a route from a first location of a vehicle (e.g., a current location of the vehicle) to a second location (e.g., a destination or an arrival place) and an estimated time of arrival. The vehicle control method may include obtaining map information (or navigation information) indicating the route from an external electronic device.

Referring to FIG. 15, the vehicle control method according to various exemplary embodiments of the present disclosure may include S 1520 for obtaining predicted energy consumption to be consumed while the vehicle is traveling along the route. The vehicle control method may include receiving the predicted energy consumption corresponding to the route from the external electronic device to obtain predicted energy consumption.

Referring to FIG. 15, the vehicle control method according to various exemplary embodiments of the present disclosure may include S1530 for dividing the route into at least one partial route depending on a change in a speed of the vehicle. The vehicle control method may include obtaining predicted energy consumption mapped to the at least one partial route.

Referring to FIG. 15, the vehicle control method according to various exemplary embodiments of the present disclosure may include S 1540 for identifying a predicted load current to be generated from a battery in the at least one divided partial route, based on the predicted energy consumption. For example, the vehicle control method may include identifying the predicted load current to be generated from the battery, based on Equation 1 above, using the predicted energy consumption mapped to the at least one partial route. For example, the vehicle control method may include identifying the predicted load current, further using a parameter for compensating for electrical energy to be obtained based on regenerative braking. For example, the vehicle control method may include obtaining the predicted load current, using the parameter, the predicted energy consumption, and/or a nominal voltage of the battery.

Referring to FIG. 15, the vehicle control method according to various exemplary embodiments of the present disclosure may include S 1550 for obtaining a predicted temperature of the battery, which will be identified if the vehicle arrives at the second location, using at least one of an outside air temperature, the predicted load current, an initial temperature of the battery, or an SOC value of the battery, or any combination thereof.

For example, the vehicle control method may include obtaining the predicted temperature of the battery, using a second outside air temperature received from the external electronic device, if a first outside air temperature identified by a sensor of the vehicle and the second outside air temperature is greater than a specified threshold.

For example, the vehicle control method may include obtaining the predicted temperature of the battery, which will be identified if the vehicle arrives at the second location, based on the execution of a battery temperature predictor (e.g., a battery temperature predictor 121 of FIG. 1).

For example, the vehicle control method may include obtaining a predicted SOC value of the battery, which will be identified if the vehicle arrives at the second location, based on the execution of a battery SOC predictor (e.g., a battery SOC predictor 122 of FIG. 1).

For example, the vehicle control method may include identifying a charging time spent to charge the battery from the predicted SOC value of the battery to a specified SOC value, based on the predicted temperature of the battery and the predicted SOC value of the battery.

For example, the vehicle control method may include displaying the identified charging time together with text indicating the second location on a display.

The present technology may identify a predicted temperature of the battery, which will be identified at a destination to which the vehicle will move, at a current location of the vehicle.

The present technology may select a charging station for charging the battery, while the vehicle is traveling from the current location of the vehicle to the destination.

Furthermore, the present technology may identify a charging time for charging the battery based on the predicted temperature of the battery and a remaining SOC value of the battery.

Furthermore, the term related to a control device such as "controller", "control apparatus", "control unit", "control device", "control module", or "server", etc refers to a hardware device including a memory and a processor configured to execute one or more steps interpreted as an algorithm structure. The memory stores algorithm steps, and the processor executes the algorithm steps to perform one or more processes of a method in accordance with various exemplary embodiments of the present disclosure. The control device according to exemplary embodiments of the present disclosure may be implemented through a nonvolatile memory configured to store algorithms for controlling operation of various components of a vehicle or data about software commands for executing the algorithms, and a processor configured to perform operation to be described above using the data stored in the memory. The memory and the processor may be individual chips. Alternatively, the memory and the processor may be integrated in a single chip. The processor may be implemented as one or more processors. The processor may include various logic circuits and operation circuits, may be configured for processing data according to a program provided from the memory, and may be configured to generate a control signal according to the processing result.

The control device may be at least one microprocessor operated by a predetermined program which may include a series of commands for carrying out the method included in the aforementioned various exemplary embodiments of the present disclosure.

The aforementioned invention can also be embodied as computer readable codes on a computer readable recording medium. The computer readable recording medium is any data storage device that can store data which may be thereafter read by a computer system and store and execute program instructions which may be thereafter read by a computer system. Examples of the computer readable recording medium include Hard Disk Drive (HDD), solid state disk (SSD), silicon disk drive (SDD), read-only memory (ROM), random-access memory (RAM), CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by a control device, and the control device may be configured by a plurality of control devices, or an integrated single control device.

In various exemplary embodiments of the present disclosure, the memory and the processor may be provided as one chip, or provided as separate chips.

In various exemplary embodiments of the present disclosure, the scope of the present disclosure includes software or machine-executable commands (e.g., an operating system, an application, firmware, a program, etc.) for enabling operations according to the methods of various embodiments to be executed on an apparatus or a computer, a non-transitory computer-readable medium including such software or commands stored thereon and executable on the apparatus or the computer.

In various exemplary embodiments of the present disclosure, the control device may be implemented in a form of hardware or software, or may be implemented in a combination of hardware and software.

Furthermore, the terms such as "unit", "module", etc. included in the specification mean units for processing at least one function or operation, which may be implemented by hardware, software, or a combination thereof.

In an exemplary embodiment of the present disclosure, the vehicle may be referred to as being based on a concept including various means of transportation. In some cases, the vehicle may be interpreted as being based on a concept including not only various means of land transportation, such as cars, motorcycles, trucks, and buses, that drive on roads but also various means of transportation such as airplanes, drones, ships, etc.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "forwards", and "backwards" are used to describe features of the exemplary embodiments with reference to the positions of such features as displayed in the figures. It will be further understood that the term "connect" or its derivatives refer both to direct and indirect connection.

The term "and/or" may include a combination of a plurality of related listed items or any of a plurality of related listed items. For example, "A and/or B" includes all three cases such as "A", "B", and "A and B".

In exemplary embodiments of the present disclosure, "at least one of A and B" may refer to "at least one of A or B" or "at least one of combinations of at least one of A and B". Furthermore, "one or more of A and B" may refer to "one or more of A or B" or "one or more of combinations of one or more of A and B".

In the present specification, unless stated otherwise, a singular expression includes a plural expression unless the context clearly indicates otherwise.

In the exemplary embodiment of the present disclosure, it should be understood that a term such as "include" or "have" is directed to designate that the features, numbers, steps, operations, elements, parts, or combinations thereof described in the specification are present, and does not preclude the possibility of addition or presence of one or more other features, numbers, steps, operations, elements, parts, or combinations thereof.

According to an exemplary embodiment of the present disclosure, components may be combined with each other to be implemented as one, or some components may be omitted.

Hereinafter, the fact that pieces of hardware are coupled operably may include the fact that a direct and/or indirect connection between the pieces of hardware is established by wired and/or wirelessly.

The foregoing descriptions of specific exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described in order to explain certain principles of the invention and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

**Claims**

1. A vehicle control apparatus, comprising:

   a processor;
   a memory operatively connected to the processor; and
   a battery,
   wherein the processor is configured to:

   identify a route from a first location of a vehicle to a second location of the vehicle and an estimated time of arrival when the vehicle will arrive at the second location;
   obtain predicted energy consumption to be consumed while the vehicle is traveling along the route;
   identify a predicted load current to be generated from the battery based on the predicted energy consumption; and
   obtain a predicted temperature of the battery, the predicted temperature to be identified if the vehicle arrives at the second location, using at least one of an outside air temperature, the predicted load current, an initial temperature of the battery, the initial temperature being identified at the first location, or a state of charge (SOC) value of the battery, the SOC being identified at the first location, or any combination thereof.

2. The vehicle control apparatus of claim 1, wherein the processor is further configured to:

   divide the route into at least one partial route depending on a change in a speed of the vehicle; and
   identify the predicted load current, in the at least one divided partial route, using a first parameter associated with electrical energy to be charged based on regenerative braking, a nominal voltage of the battery, the estimated time of arrival, and the predicted energy consumption.

3. The vehicle control apparatus of claim 1 or 2,

   wherein the outside air temperature includes a first outside air temperature and a second outside air temperature, and
   wherein the processor is further configured to:

   identify the first outside air temperature at the first location;
   obtain the second outside air temperature corresponding to a location of the vehicle which is traveling from an external electronic device, while the vehicle is traveling along the route;

   obtain the predicted temperature of the battery, using at least one of the second outside air temperature, the predicted load current, the initial temperature of the battery, or the SOC value of the battery, or any combination thereof, in response that a difference between the first outside air temperature and the second outside air temperature is greater than or equal to a first threshold; and

obtain the predicted temperature of the battery, using at least one of the first outside air temperature, the predicted load current, the initial temperature of the battery, or the SOC value of the battery, or any combination thereof, in response that the difference between the first outside air temperature and the second outside air temperature is less than the first threshold.

4. The vehicle control apparatus of one of claims 1-3,

wherein the outside air temperature includes a third outside air temperature and a fourth outside air temperature, and
wherein the processor is further configured to:

identify the third outside air temperature at the first location;
obtain the fourth outside air temperature indicating a temperature at the second location at the estimated time of arrival, from an external electronic device;

obtain the predicted temperature of the battery, using at least one of the fourth outside air temperature, the predicted load current, the initial temperature of the battery, or the SOC value of the battery, or any combination thereof, in response that a difference between the third outside air temperature and the fourth outside air temperature is greater than or equal to a second threshold; and
obtain the predicted temperature of the battery, using at least one of the third outside air temperature, the predicted load current, the initial temperature of the battery, or the SOC value of the battery, or any combination thereof, in response that the difference between the third outside air temperature and the fourth outside air temperature is less than the second threshold.

5. The vehicle control apparatus of one of claims 1-4, wherein the processor is further configured to:

identify a second parameter and a third parameter, using the predicted load current and the SOC value of the battery; and
obtain the predicted temperature of the battery, using at least one of the second parameter, the third parameter, the outside air temperature, or the initial temperature of the battery, or any combination thereof,
wherein the second parameter indicates energy lost by internal resistance of the battery, using the predicted load current and the SOC value of the battery, and
wherein the third parameter indicates an amount of change in entropy for the battery, using the predicted load current and the SOC value of the battery.

6. The vehicle control apparatus of claim 5, wherein the second parameter is obtained based on a relationship between the internal resistance of the battery and a temperature of the battery and a relationship between the internal resistance of the battery and the SOC value of the battery.

7. The vehicle control apparatus of claim 5 or 6, wherein the processor is configured to:

additionally identify a thermal capacity of the battery and thermal resistance of the battery due to the outside air temperature; and
obtain the predicted temperature of the battery, using at least one of the second parameter, the third parameter, or the initial temperature of the battery, or any combination thereof, the thermal capacity of the battery, and the thermal resistance of the battery.

8. The vehicle control apparatus of one of claims 1-7, wherein the SOC includes a first SOC value,

wherein the predicted temperature includes a first predicted temperature, and
wherein the processor is further configured to:
identify a third location indicating a target charging station between the first location and the second location;
obtain a second predicted temperature of the battery, the second predicted temperature to be identified in response that the vehicle arrives at the third location, based on the predicted load current, the initial temperature of the battery, and the first SOC value of the battery;

predict a second SOC value of the battery at the third location, based on the second predicted temperature; and
identify a charging time for charging the battery from the second SOC to a predetermined SOC value, using the target charging station.

9. The vehicle control apparatus of claim 8, wherein the processor is further configured to:

identify a drivable distance of the vehicle, based on the SOC value of the battery; and
identify the third location, using information associated with a plurality of charging stations, within a distance shorter than the drivable distance, and
wherein the information associated with the plurality of charging stations includes at least one of a charging speed, a charging type, a distance from the vehicle for each of the charging stations, or whether the plurality of charging stations are available, or any combination thereof.

10. The vehicle control apparatus of claim 8 or 9, further including:

a display operatively connected to the processor,
wherein the processor is further configured to:
display the charging time together with text indicating the third location on the display, based on identifying the route.

11. A vehicle control method, comprising:

identifying, by a processor, a route from a first location of a vehicle to a second location of the vehicle and an estimated time of arrival when the vehicle will arrive at the second location;
obtaining predicted energy consumption to be consumed while the vehicle is traveling along the route;
identifying a predicted load current to be generated from a battery based on the predicted energy consumption; and
obtaining a predicted temperature of the battery, the predicted temperature to be identified if the vehicle arrives at the second location, using at least one of an outside air temperature, the predicted load current, an initial temperature of the battery, the initial temperature being identified at the first location, or a state of charge (SOC) value of the battery, the SOC being identified at the first location, or any combination thereof.

12. The vehicle control method of claim 11, wherein the identifying of the predicted load current includes:

dividing the route into at least one partial route depending on a change in a speed of the vehicle; and
identifying the predicted load current, in the at least one divided partial route, using a first parameter associated with electrical energy to be charged based on regenerative braking, a nominal voltage of the battery, the estimated time of arrival, and the predicted energy consumption.

13. The vehicle control method of claim 11 or 12,

wherein the outside air temperature includes a first outside air temperature and a second outside air temperature, and
wherein the vehicle control method further includes:

identifying the first outside air temperature at the first location;
obtaining the second outside air temperature corresponding to a location of the vehicle which is traveling from an external electronic device, while the vehicle is traveling along the route;
obtaining the predicted temperature of the battery, using at least one of the second outside air temperature, the predicted load current, the initial temperature of the battery, or the SOC value of the battery, or any combination thereof, in response that a difference between the first outside air temperature and the second outside air temperature is greater than or equal to a first threshold; and
obtaining the predicted temperature of the battery, using at least one of the first outside air temperature, the predicted load current, the initial temperature of the battery, or the SOC value of the battery, or any combination thereof, in response that the difference between the first outside air temperature and the second outside air temperature is less than the first threshold.

14. The vehicle control method of one of claims 11-13,

wherein the outside air temperature includes a third outside air temperature and a fourth outside air temperature, and

wherein the vehicle control method further includes:

identifying the third outside air temperature at the first location;

obtaining the fourth outside air temperature indicating a temperature at the second location at the estimated time of arrival, from an external electronic device;

obtaining the predicted temperature of the battery, using at least one of the fourth outside air temperature, the predicted load current, the initial temperature of the battery, or the SOC value of the battery, or any combination thereof, in response that a difference between the third outside air temperature and the fourth outside air temperature is greater than or equal to a second threshold; and

obtaining the predicted temperature of the battery, using at least one of the third outside air temperature, the predicted load current, the initial temperature of the battery, or the SOC value of the battery, or any combination thereof, in response that the difference between the third outside air temperature and the fourth outside air temperature is less than the second threshold.

15. The vehicle control method of one of claims 11-14, wherein the obtaining of the predicted temperature of the battery includes:

identifying a second parameter and a third parameter, using the predicted load current and the SOC value of the battery; and

obtaining the predicted temperature of the battery, using at least one of the second parameter, the third parameter, the outside air temperature, or the initial temperature of the battery, or any combination thereof,

wherein the second parameter indicates energy lost by internal resistance of the battery, using the predicted load current and the SOC value of the battery, and

wherein the third parameter indicates an amount of change in entropy for the battery, using the predicted load current and the SOC value of the battery.

VEHICLE CONTROL DEVICE
100

PROCESSOR
110

BATTERY
140

COMMUNICATION
CIRCUIT
150

DISPLAY
160

MEMORY
120

BATTERY TEMPERATURE
PREDICTOR
121

BATTERY SOC PREDICTOR
122

BATTERY CHARGING
TIME PREDICTOR
123

EXTERNAL ELECTRONIC DEVICE
101

FIG.1

EP 4 585 456 A1

FIG.2

IDENTIFY SOC OF BATTERY,
TEMPERATURE OF BATTERY,
AND OUTSIDE AIR TEMPERATURE —S310

OBTAIN ENERGY CONSUMPTION —S320

PREDICT TEMPERATURE OF BATTERY,
USING BATTERY TEMPERATURE PREDICTOR —S330

S340
IS THERE
CHARGING STATION
IN ROUTE?

NO

YES

PREDICT SOC, USING BATTERY
SOC PREDICTOR —S350

PREDICT SOC, USING BATTERY
SOC PREDICTOR —S360

PREDICT CHARGING TIME,
USING BATTERY CHARGING
TIME PREDICTOR —S370

DISPLAY SCREEN ON DISPLAY —S380

FIG.3

FIG.4

EP 4 585 456 A1

EP 4 585 456 A1

500

100

512  511

210

535  530

212-1

212-2

521  522

211

FIG.5

FIG.6A

600-5

—— 621 ········ 622 —— 623

Current [A]

Time [sec]

FIG.6B

700-1

—— 701 ········ 702 • 703 ⊙ 704 ---- 705

700-2

—— 706 —— 707

Time [sec]

FIG.7

<u>800</u>

FIG.8A

850

FIG.8B

900

FIG.9

910

901                 1001          Delta_Ah        1003              1005              903

```
┌───┐              ╱│                          ┌─────┐          ┌─────┐          ┌───┐
│ 1 │─────────────╱ │                          │  ×  │          │     │          │ 1 │
└───┘            ╱-K-│──────────────────┐      │  ÷  │── i_avg ─│  ×  │── i_avg ─└───┘
Delta_Energy    ╲   │                   │      └─────┘          └─────┘          i_avg
                 ╲  │                   │                          │
              10/36/Pck_V                                         │
                                                                  │
902                 1002                                          │
┌───┐              ╱│                          ┌─────┐            │
│ 1 │─────────────╱ │                          │ ┌─┐ │────────────┘
└───┘            ╱-K-│──────────────────┘      │_┘ │ │
Delta_Time      ╲   │                          └─────┘
                 ╲  │                             1004
                 1/60
```

FIG.10

FIG.11

EP 4 585 456 A1

EP 4 585 456 A1

FIG.12

1301

906

1-DT(u)

2

SOC_sim

1302

1/1000

903

1303

3

−1

i_avg

1304

X

1305

num_cell

1306

1

Rev heat

1101

1

Temp_in

FIG.13

FIG. 14

```
┌─────────────────────────────────────────┐
│ IDENTIFY ROUTE FROM FIRST LOCATION OF    │
│ VEHICLE TO SECOND LOCATION AND ESTIMATED │──S1510
│ TIME OF ARRIVAL                          │
└─────────────────────────────────────────┘
                    │
                    ▼
┌─────────────────────────────────────────┐
│ OBTAIN PREDICTED ENERGY CONSUMPTION TO   │
│ BE CONSUMED WHILE VEHICLE IS TRAVELING   │──S1520
│ ALONG ROUTE                              │
└─────────────────────────────────────────┘
                    │
                    ▼
┌─────────────────────────────────────────┐
│ DIVIDE ROUTE INTO AT LEAST ONE PARTIAL   │
│ ROUTE DEPENDING ON CHANGE IN SPEED OF    │──S1530
│ VEHICLE                                  │
└─────────────────────────────────────────┘
                    │
                    ▼
┌─────────────────────────────────────────┐
│ IDENTIFY PREDICTED LOAD CURRENT          │
│ TO BE GENERATED FROM BATTERY IN AT       │
│ LEAST ONE DIVIDED PARTIAL ROUTE, BASED ON│──S1540
│ PREDICTED ENERGY CONSUMPTION             │
└─────────────────────────────────────────┘
                    │
                    ▼
┌─────────────────────────────────────────┐
│ OBTAIN PREDICTED TEMPERATURE OF BATTERY, │
│ WHICH WILL BE IDENTIFIED IF VEHICLE      │
│ ARRIVES AT SECOND LOCATION, USING AT     │
│ LEAST ONE OF OUTSIDE AIR TEMPERATURE,    │──S1550
│ PREDICTED LOAD CURRENT, INITIAL          │
│ TEMPERATURE OF BATTERY, OR SOC OF        │
│ BATTERY, OR ANY COMBINATION THEREOF      │
└─────────────────────────────────────────┘
```

FIG.15

Europäisches
Patentamt

European
Patent Office

Office européen
des brevets

# EUROPEAN SEARCH REPORT

**Application Number**

EP 24 20 2200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/324765 A1 (IIDA TAKAHIDE [JP] ET AL) 23 December 2010 (2010-12-23) | 1,2,5-7, 11,12,15 | INV.<br>B60L58/12 |
| Y | * paragraphs [0049], [0050], [0061], [0101] *<br>* figures 9, 10 * | 3,4, 8-10,13, 14 | B60W50/00<br>B60L58/24<br>B60L7/10 |
| Y | US 2019/315232 A1 (ING ADAM H [US] ET AL) 17 October 2019 (2019-10-17) | 3,4, 8-10,13, 14 | |
| A | * paragraphs [0140], [0149], [0165] * | 1,11 | |
| A | JP 2018 129887 A (SUBARU CORP) 16 August 2018 (2018-08-16)<br>* paragraphs [0077], [0078] * | 1,9-11 | |
| X | US 2016/325637 A1 (PAYNE JOSHUA D [US] ET AL) 10 November 2016 (2016-11-10) | 1,11 | |
| A | * paragraphs [0008], [0026], [0031], [0052] *<br>* figures 1-3 * | 2-10, 12-15 | |

|  |  |
|---|---|
| | **TECHNICAL FIELDS SEARCHED (IPC)**<br><br>B60L<br>B60W |

The present search report has been drawn up for all claims

| Place of search | Date of completion of the search | Examiner |
|---|---|---|
| The Hague | 11 March 2025 | Wirth, Sebastian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 2200

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | | Publication date |
|---|---|---|---|---|
| US 2010324765 A1 | 23-12-2010 | CN | 101778732 A | 14-07-2010 |
| | | EP | 2177389 A1 | 21-04-2010 |
| | | JP | 4228086 B1 | 25-02-2009 |
| | | JP | 2009044887 A | 26-02-2009 |
| | | US | 2010324765 A1 | 23-12-2010 |
| | | WO | 2009020217 A1 | 12-02-2009 |
| US 2019315232 A1 | 17-10-2019 | NONE | | |
| JP 2018129887 A | 16-08-2018 | JP | 6860367 B2 | 14-04-2021 |
| | | JP | 2018129887 A | 16-08-2018 |
| US 2016325637 A1 | 10-11-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240004340